# EUROPEAN PATENT SPECIFICATION

(11) **EP 3 653 546 B1**
(45) Date of publication and mention of the grant of the patent: **22.06.2022**
(21) Application number: 19208370.7
(22) Date of filing: 11.11.2019
(51) Int. Cl.: B65G 43/08, B65G 67/20, B65G 21/10, B65G 47/68, B65G 47/244, B65G 67/24

(54) **ROBOTIC MATERIAL HANDLING SYSTEM**
ROBOTISCHES MATERIALHANDHABUNGSSYSTEM
SYSTÈME DE MANIPULATION DE MATERIAU ROBOTISÉ

(30) Priority: 16.11.2018 US 201816193127
(43) Date of publication of application: 20.05.2020
(60) Divisional application: 22169056.3
(73) Proprietor: Intelligrated Headquarters LLC, Mason, OH 45040 (US)
(72) Inventor: CLUCAS, Dominic George, Saint Peters, MO Missouri 63376 (US); WICKS, Matthew R., St. Charles, MO Missouri 63304 (US)
(74) Representative: Haseltine Lake Kempner LLP

(56) References cited:
- WO-A1-2018/053169
- JP-U- S5 980 314
- US-A1- 2018 297 786

## Description

### TECHNICAL FIELD

The present invention relates to a robotic material handling system that unloads and conveys articles, and a method for conveying articles on a robotic material handling system.

### BACKGROUND

Trucks and trailers loaded with cargo and products move across the country to deliver products to commercial loading and unloading docks at stores, warehouses, and distribution centers. Trucks can have a trailer mounted on the truck, or can be of a tractor-semi trailer configuration. To lower overhead costs at retail stores, in-store product counts have been reduced, and products-in-transit now count as part of available store stock. Unloading trucks quickly at the unloading docks of warehouses and regional distribution centers has attained new prominence as a way to refill depleted stock.

Trucks are typically loaded and unloaded with forklifts if the loads are palletized and with manual labor if the products are stacked within the trucks. Unloading large truck shipments manually with human laborers can be physically difficult, and can be costly due to the time and labor involved. In addition, hot or cold conditions within a confined space of a truck trailer or shipping container can be deemed unpleasant work. Consequently, a need exists for an improved unloading system that can unload bulk quantities of stacked cases and cargo from truck trailers more quickly than human laborers and at a reduced cost.

In order to be economical, automation of loading or unloading needs to be relatively fast. Generally-known approaches to unloading cartons have extremely limited acceptance. Each carton is generally conveyed rearward in a singulated fashion, limiting the rate at which cartons can be unloaded. Attempting to simultaneously convey unsingulated articles can cause the articles to jam, which creates a time consuming manual procedure for shutting down the unloading process and attempting to access the inserted end of the unloader within the confined space of a shipping container or truck trailer.

WO2018/053169A1 discloses a method of conveying articles on a robotic material handling system according to the preamble of claim 1, and a robotic material handling system according to the preamble of claim 8. In particular, the document discloses a robotic carton unloader for unloading cartons in a carton pile has a mobile body and a movable robotic arm attached to the mobile body that has an end effector at a movable end thereof to unload cartons from the carton pile. A conveyor system is attached to the mobile body and extends from front to rear of the carton unloader to convey cartons received thereon by the moveable robotic arm. The conveyor system comprises a central portion carried on the mobile body and a front portion extending therefrom towards the carton pile. The front portion is configured to change width from narrow to wider to act as a shield to catch and then move falling cartons received thereon.

Applicant has identified a number of deficiencies and problems associated with conventional methods of trucks and trailers unloading. Through applied effort, ingenuity, and innovation, many of these identified problems have been solved by developing solutions that are included in embodiments of the present disclosure, many examples of which are described in detail herein.

### SUMMARY

According to a first aspect of the invention, the method of conveying articles of claim 1 is provided.

In an embodiment, the method may further include guiding the one or more articles with one or more angled guides of the front portion onto the rearward conveyor. In an embodiment, the rearward conveyor may be narrower than the front portion.

In an embodiment, separating the one or more jammed articles may further include actuating at least one of the plurality of zones under the one or more jammed articles in the second direction, while actuating at least another one of the plurality of zones under the one or more jammed articles in the first direction.

In an embodiment, separating the one or more jammed articles may further include actuating at least one of the plurality of zones under the one or more jammed articles at a first speed, while actuating at least another one of the plurality of zones under the one or more jammed articles at a second speed different than the first speed.

In an embodiment, separating the one or more jammed articles may further include actuating at least one of the plurality of zones under the one or more jammed articles at a first speed in the first direction, while stopping at least another one of the plurality of zones under the one or more jammed articles.

In an embodiment, separating the one or more jammed articles may further include accelerating or decelerating at least one of the plurality of zones under the one or more jammed articles in one or more of the first direction and the second direction.

In an embodiment, the one or more jammed articles may include a jammed oversize article. In an embodiment, dislodging the one or more jammed articles may include actuating at least two of the plurality of zones in opposite directions to move a first end of the jammed oversize article upstream and a second end of the jammed oversize article downstream to rotate the jammed oversize article from a broad side position to a narrow end first position.

According to a second aspect of the invention, the robotic handling system of claim 8 is provided.

In an embodiment, the controller may further actuate the expansion of the front portion to the first configuration while activating at least one of the plurality of individually actuatable zones contacting the one or more jammed articles, determine whether at least one of the one or more jammed articles is moving in the first direction towards the rearward conveyor, and, in response, actuate a retraction of the front portion to the second configuration.

In an embodiment, the controller may further activate at least one of the plurality of individually actuatable zones of the front portion to convey at least one portion of the at least one jammed article in the second direction away from the rearward conveyor.

In an embodiment, the controller may further separate the one or more jammed articles by actuating at least one of the plurality of zones under the one or more jammed articles in the second direction, while actuating at least another one of the plurality of zones under the one or more jammed articles in the first direction.

In an embodiment, the controller may further separate the one or more jammed articles by actuating at least one of the plurality of zones under the one or more jammed articles at a first speed, while actuating at least another one of the plurality of zones under the one or more jammed articles at a second speed different than the first speed.

In an embodiment, the controller may further separate the one or more jammed articles by actuating at least one of the plurality of zones under the one or more jammed articles at a first speed in the first direction, while stopping at least another one of the plurality of zones under the one or more jammed articles.

In an embodiment, the controller may further separate the one or more jammed articles by accelerating or decelerating at least one of the plurality of zones under the one or more jammed articles in one or more of the first direction and the second direction.

In an embodiment, the robotic material handling system may further include one or more angled guides coupled to the front portion for guiding one or more articles onto the rearward conveyor. In an embodiment, the rearward conveyor may be narrower than the front portion. Further, in an embodiment, the one or more angled guides may expand when operating the front portion in the first configuration, and/or retract when operating the front portion in the second configuration.

### BRIEF DESCRIPTION OF THE DRAWINGS

The description of the illustrative embodiments can be read in conjunction with the accompanying figures. It will be appreciated that for simplicity and clarity of illustration, elements illustrated in the figures have not necessarily been drawn to scale. For example, the dimensions of some of the elements are exaggerated relative to other elements.
**FIG. 1** illustrates a side view with functional block diagram of a robotic material handling system and extendable conveyor unloading cartons from within a carton pile container using a vision system that is multi-quadrant and combined two-dimensional (2D) and three-dimensional (3D), according to one or more embodiments;
**FIG. 2** illustrates a top isometric view of the robotic material handling system of **FIG. 1****,** according to one or more embodiments;
**FIG. 3** illustrates a bottom isometric view of the robotic material handling system of **FIG. 1****,** according to one or more embodiments;
**FIG. 4** illustrates a front side view of a front portion of the robotic material handling system of **FIG. 1****,** according to one or more embodiments;
**FIG. 5** illustrates a right side view of a front portion of the robotic material handling system of **FIG. 1****,** according to one or more embodiments;
**FIG. 6** illustrates a block diagram of an exemplary computing environment for an onboard unloading controller of the robotic material handling system of **FIG. 1****,** according to one or more embodiments;
**FIG. 7** illustrates a functional block diagram of a vision system of the robotic material handling system of **FIG. 1****,** according to one or more embodiments;
**FIG. 8** illustrates a top view of the robotic material handling system of **FIG. 1** that is laterally off center to an extendable conveyor, according to one or more embodiments;
**FIG. 9** illustrates a top view of a front nose conveyor surface annotated with scanning zones and a singulating rearward conveyor portion of the robotic material handling system of **FIG. 1****,** according to one or more embodiments;
**FIG. 10** illustrates a top diagrammatic view of the scanning zones of **FIG. 9** that contain articles, according to one or more embodiments;
**FIG. 11** illustrates a flow diagram of a method of performing product jam detection of the front singulating portion of the robotic material handling system using 3D sensor data, according to one or more embodiments;
**FIG. 12** illustrates a flow diagram of a method of detecting product in individual distal, center, and proximal zones of the front portion of the robotic material handling system using one of depth map and infrared imagery, according to one or more embodiments;
**FIG. 13** illustrates a flow diagram of a method of conveying articles on a nose conveyor surface of a robotic material handling system, according to one or more embodiments;
**FIGs. 14A** - **14B** illustrate a flow diagram of a method of conveying articles from a nose conveyor surface having five parallel conveyors onto a rearward conveyor that is aligned with the center three parallel conveyors;
**FIGs. 15A** - **15F** illustrate top view diagrams of a sequence of conveying articles off of the nose conveyor surface of the robotic material handling system of **FIG. 1****,** according to one or more embodiments;
**FIG. 16** illustrates a top view of conveying articles from the nose conveyor surface and the rearward conveyor of the robotic material handling system during normal, unjammed operation, according to one or more embodiments;
**FIG. 17A** illustrates a top view of the robotic material handling system having the nose conveyor surface with jammed articles, according to one or more embodiments;
**FIG. 17B** illustrates a top view of the nose conveyor surface of the robotic material handling system having the jammed articles conveyed forward, according to one or more embodiments;
**FIG. 17C** illustrates a top view of the nose conveyor surface having a portion of the previously jammed articles conveyed rearward, according to one or more embodiments;
**FIG. 17D** illustrates a top view of the nose conveyor surface having a remaining portion of the previously jammed articles conveyed rearward, according to one or more embodiments;
**FIG. 18A** illustrates a top view of the nose conveyor surface having a long article that is transversely aligned causing a jam, according to one or more embodiments;
**FIG. 18B** illustrates a top view of the nose conveyor surface having a portion of the long article conveyed forward to rotate at least partially into longitudinal alignment, according to one or more embodiments;
**FIG. 18C** illustrates a top view of the nose conveyor surface rearwardly conveying the partially longitudinally aligned article, according to one or more embodiments;
**FIG. 18D** illustrates a top view of the nose conveyor surface rearwardly conveying the partially longitudinally aligned article on the rearward conveyor, according to one or more embodiments;
**FIG. 19A** illustrates a perspective view of the nose conveyor surface in a raised position, according to one or more embodiments;
**FIG. 19B** illustrates a perspective view of the nose conveyor surface in a homed position aligned with the rearward conveyor, according to one or more embodiments;
**FIG. 20A** illustrates a right side view of the nose conveyor surface in a raised position conveying a series of articles, according to one or more embodiments;
**FIG. 20B** illustrates a right side view of the nose conveyor surface in the raised position with an article stalled on a transition plate, according to one or more embodiments;
**FIG. 20C** illustrates a right side view of the nose conveyor surface in an increased raised position with an article being dislodged from the transition plate, according to one or more embodiments;
**FIG. 20D** illustrates a right side view of the nose conveyor surface in the increased raised position with the dislodged article being conveyed on the rearward conveyor, according to one or more embodiments;
**FIG. 20E** illustrates a right side view of the nose conveyor surface in homed position discharging article in resumed normal operation, according to one or more embodiments;
**FIG. 21** illustrates a flow diagram of a method of clearing a jam of an article that is at least partially supported on a nose conveyor portion of a robotic material handling system, according to one or more embodiments; and
**FIG. 22** illustrates a flow diagram of an exemplary method of clearing a jam of an article that is at least partially supported on a nose conveyor portion of a robotic material handling system, according to one or more embodiments.
**FIGS. 23A-G** illustrate operations of the robotic carton unloader related to conveying, jamming, and dislodging of a plurality of cartons in the material handling system, in accordance with the invention.
**FIG. 24** illustrates a flowchart describing a method for detecting one or more jammed articles in the material handling system, in accordance with the invention.
**FIG. 25** illustrates a flowchart describing a method for detecting one or more jammed articles in the material handling system, in accordance with some embodiments described herein.

### DETAILED DESCRIPTION

Some embodiments of the present disclosure will now be described more fully hereinafter with reference to the accompanying drawings, in which some, but not all embodiments of the disclosure are shown.

In one or more aspects of the present disclosure, a controller of a robotic material handling system performs a method that conveys articles from a pile within a confined space. In one or more embodiments, the controller includes a computer-readable storage medium containing instructions. When executed by a processor, the instructions cause the robotic material handling system to position a vertically-movable nose conveyor surface of a robotic material handling system proximate to an article pile. The nose conveyor surface has two or more parallel conveyors that are distal to and proximally feed a rearward conveyor that is laterally narrower than the nose conveyor surface. One or more articles per operation are robotically moved onto the nose conveyor surface from the article pile. At least one of two or more parallel conveyors of the nose conveyor surface are activated to convey at least one article from the nose conveyor toward the rearward conveyor. The controller detects a jammed article that is at least partially supported by the nose conveyor. The jammed article has failed to fully convey onto the rearward conveyor in correspondence to the activated at the least one or two or more parallel conveyors. The controller attempts to dislodge the jammed article by causing at least one of: (i) vertically repositioning the nose conveyor surface; and (ii) activating at least one of the two or more parallel conveyors of the nose conveyor surface to run in a forward direction. After the attempt to dislodge, the controller activates at least one parallel conveyor that is contact with the jammed article in a rearward direction.

Robotic carton loader or unloader incorporates three-dimensional (3D) and two-dimensional (2D) sensors to detect respectively a 3D point cloud and a 2D image of a carton pile within transportation carrier such as a truck trailer or shipping container. Edge detection is performed using the 3D point cloud, discarding segments that are too small to be part of a product such as a carton. Segments in the 2D image of the carton pile that are too large to correspond to a carton are processed to detect additional edges. Results from 3D and 2D edge detection are converted in a calibrated 3D space of the material carton loader or unloader to perform one of loading or unloading of the transportation carrier. Image processing can also detect potential jamming of products sequence from individually controllable parallel conveyors of a nose conveyor surface of the robotic carton loader or unloader.

In one aspect of the present disclosure, a customized Red-Green-Blue and Depth (RGB-D) vision solution is provided for autonomous truck unloaders. A RGB-D sensor system was designed using a combination of industrial Depth and RGB sensor specifically tailored to the needs of a truck unloader as a rugged industrial solution that provides high quality data at the required speed, resolution, and field of view needed for object recognition. Four such units combined gives the RGB, depth and RGB-D data across the entire width and height of a trailer. Each of the RGB cameras has unique projection parameters. Using those and the relative position of the Depth and RGB sensor, the 3D from the depth sensor is mapped onto 2D RGB image data from RGB sensor and vice versa. The data from 3D and 2D RGB can be stitched together on the higher level to obtain an entire scene.

In one exemplary embodiment, a 3D sensor performs conveyor screening operation. Using 3D point cloud data, infrared image, and depth map as an input data, two 3D sensing devices cover the whole conveyor region. The 3D point cloud data is used to estimate the height of the box. The tallest box is taken into account to make a decision using a threshold to predict a conveyor jam scenario. A threshold value can be set slightly less than conveyor clearance for product discharge from the truck unloader itself or a downstream clearance. Depth map or infrared image is used to perform conveyor screening to detect the presence of the product on the conveyor. A conveyor template with no product is compared to the input to obtain a difference image. The difference image is evaluated using predefined zones. An array of product present in various zones of the conveyor are provided. From these, sequenced singulation operations can be constructed to expedite discharge. In one aspect, the conveyor template includes a baseline scan of the conveyor from a 3D sensor is required as a basis for comparison. The baseline scan can be captured and used perpetually or be acquired at startup. The cameras are placed such that the field of view covers the entire area of interest. Perspective is important to minimize shadowing. Active noise sources should be detected and reduced. Occluding, moving, or eliminating the detected noise sources is preferred. For example, having multiple 3D sensors can create situations where one 3D sensor introduces noise on the other. Thus, each 3D sensor may be sequenced such that no two 3D sensors sharing the same field of view are active at the same time. The area of interest and the contained zones are identified within the given field of view.

In one aspect of the present disclosure, during setup, a baseline scan from a 3D sensor can be used as a basis for comparison. The baseline scan can be captured and used perpetually or be acquired at startup. Further, the cameras can be placed such that the field of view covers the entire area of interest. Perspective can minimize shadowing. Further, active noise sources may be detected and reduced. The detected noise sources may be occluded, moved, and/or eliminated. The area of interest and the contained zones may be identified within the given field of view.

In one aspect of the present disclosure, during runtime, the conveyor screening operation may be triggered from an external source, for example, a PLC. A response may confirm the receipt of the trigger. This may be a periodic message response of which zones are occupied in the area of interest within the field of view. Further, internally the sensor may be triggered to capture images at a rate preferred to minimize idle time and maintain the ideal response time to the monitoring system (e.g. PLC). Captured frames from the sensor may be compared against the based frame to identify any product in the given zones. If a product is detected in a given zone, a zone occupy bit is set to true for that zone and sent back to the monitoring system (e.g. PLC). Further, the monitoring system may send a trigger off message to the unloader until the responses cease.

In some embodiments, there are two "roles" in this system - the "operator" and the "maintainer." The operator engages the controlling system (e.g. PLC) and thereby trigger the conveyor screen application on and off. The maintainer can manage the positioning of sensors relative to the area of interest; reduce or eliminate sensor noise sources; adjust any filtering levels; and potentially capture the baseline scan to begin operation. These roles could be automated.

After commissioning the robotic carton unloader, the lifetime is expected to be long. Average ambient operating temperature, source voltage consistency, shock and vibration isolation, isolation from high power emitters, if controlled properly, will extend the life of the sensors and the system. At the end of life per component, more false positives and false negatives are expected. Dead points can be monitored on the sensor to the point that when a minimum number of points is reached, the sensor can be flagged for replacement. Component pieces are serviceable assuming original parts or compatible replacements can be sourced.

In one aspect, sensor setup for conveyor screening for product detection is faster and provide zone info for smarter operation of conveyor system, which results in a decrease in cycle time of overall machine and an increase the efficiency of the machine. Two 3D sensor system provides higher field of view of conveyor minimizes false positive detections and provides reliable and robust conveyor screening when compared to traditional Light Detection and Ranging (LiDAR)'s which limits its capabilities in providing detection only in 2D space. Conveyor jam recovery mode helps controls systems to react appropriately in case of taller cases or multi stacked cases on the conveyor.

In the following detailed description of exemplary embodiments of the disclosure, specific exemplary embodiments in which the disclosure may be practiced are described in sufficient detail to enable those skilled in the art to practice the disclosed embodiments. For example, specific details such as specific method orders, structures, elements, and connections have been presented herein.

References within the specification to "one embodiment," "an embodiment," "embodiments", or "one or more embodiments" are intended to indicate that a particular feature, structure, or characteristic described in connection with the embodiment is included in at least one embodiment of the present disclosure. The appearance of such phrases in various places within the specification are not necessarily all referring to the same embodiment, nor are separate or alternative embodiments mutually exclusive of other embodiments. Further, various features are described which may be exhibited by some embodiments and not by others. Similarly, various requirements are described which may be requirements for some embodiments but not other embodiments.

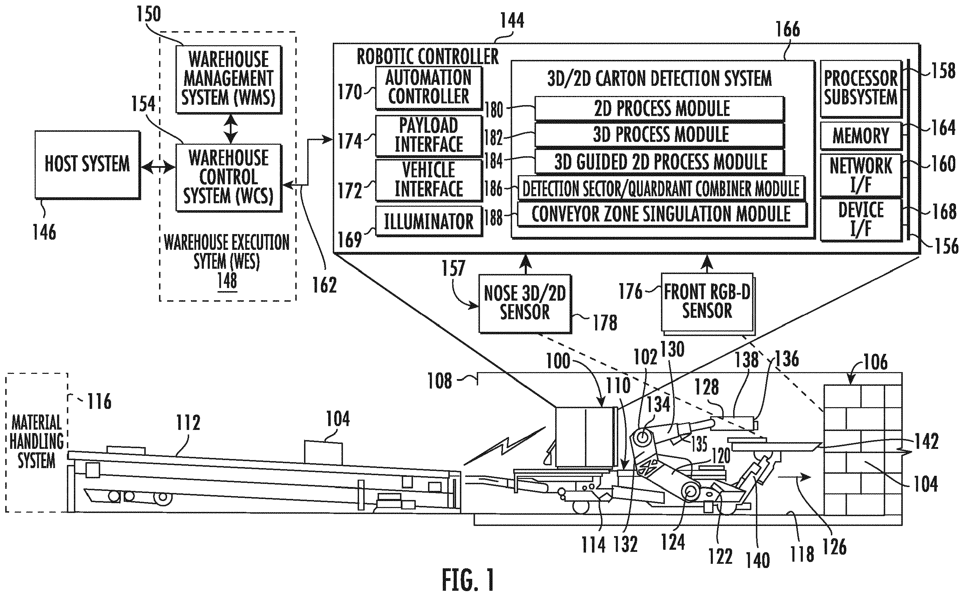

**FIG. 1** illustrates a robotic material handling system **100** having a manipulator such as a robotic arm assembly **102** unloads cartons **104** from a carton pile **106** inside of a carton pile container **108,** such as a trailer, shipping container, storage unit, etc. Robotic arm assembly **102** places the cartons **104** onto a conveyor system **110** of the robotic material handling system **100** that conveys the cartons **104** back to an extendable conveyor **112** that follows a mobile body **114** of the robotic material handling system **100** into the carton pile container **108.** The extendable conveyor **112** in turn conveys the cartons **104** to a material handling system **116** such as in a warehouse, store, distribution center, etc.

In one or more embodiments, the robotic material handling system **100** autonomously unloads a carton pile **106** resting on a floor **118** of the carton pile container **108.** The mobile body **114** is self-propelled and movable across the floor **118** from outside to the innermost portion of the carton pile container **108.** Right and left lower arms **120** of the robotic arm assembly **102** are pivotally attached at a lower end **122** respectively to the mobile body **114** on opposing lateral sides of the conveyor system **110** passing there between. The right and left lower arms **120** rotate about a lower arm axis **124** that is perpendicular to a longitudinal axis **126** of the conveyor system **110.** An upper arm assembly **128** of the robotic arm assembly **102** has a rear end **130** pivotally attached at an upper end **132** respectively of the right and left lower arms **120** to pivotally rotate about an upper arm axis **134** that is perpendicular to the longitudinal axis **126** of the conveyor system **110** and parallel to the lower arm axis **124.** A manipulator head **136** is attached to a front end **138** of the upper arm assembly **128** and engages at least one carton **104** at a time from the carton pile **106** resting on the floor **118** for movement to the conveyor system **110.** The pivotal and simultaneous mirrored movement of the right and left lower arms **120** maintains the upper arm axis **134** at a relative height above the conveyor system **110** that enables the at least one carton **104** to be conveyed by the conveyor system **110** without being impeded by the robotic arm assembly **102** as soon as the manipulator head **136** is clear. In one or more embodiments, the robotic material handling system **100** includes a lift **140** attached between the mobile body **114** and a front portion **142** of the conveyor system **110.** The lift **140** moves the front portion **142** of the conveyor system **110** relative to the floor **118** to reduce spacing underneath the at least one carton **104** during movement from the carton pile **106** to the conveyor system **110.**

A higher level system can assign an autonomous robotic vehicle controller **144** of the robotic material handling system **100** to a particular carton pile container **108** and can receive information regarding progress of loading/unloading as well as provide a channel for telecontrol. A human operator could selectively intervene when confronted with an error in loading or unloading. The higher level system can include a host system **146** that handles external order transactions that are to be carried out by the material handling system **116.** Alternatively or in addition, a warehouse execution system (WES) **148** can provide vertical integration of a warehouse management system (WMS) **150** that performs order fulfillment, labor management, and inventory tracking for a facility such as a distribution center. WES **148** can include a vertically integrated warehouse control system (WCS) **154** that controls automation that carries out the order fulfillment and inventory movements requested by the WMS **150.**

In one or more embodiments, once assigned by the WES **148** or manually enabled, the robotic material handling system **100** can operate autonomously under control of the WCS **154** in: (i) moving into a carton pile container **108,** (ii) performing one of loading or unloading the carton pile container **108,** and (iii) moving out of the carton pile container **108.** In order to navigate within the carton pile container **108** and to expeditiously handle cartons **104** therein, a carton detection system **166** of the WCS **154** includes sensors **157** (including the nose 3D/2D sensors 178 and Front 3D/2D sensors 176 ) attached respectively to one of the mobile body **114** and the movable robotic manipulator (robotic arm assembly **102)** to provide a two-dimensional (2D) RGB image and a three-dimensional (3D) point cloud of at least one portion of the carton pile **106** resting on the floor **118** of a carton pile container **108.** The carton pile container **108** can be stationery or mobile, such as transportation carriers for highway, railway or shipping on navigable waters.

Controller **144** provides an exemplary environment within which one or more of the described features of the various embodiments of the disclosure can be implemented. A controller **144** can be implemented as a unitary device or distributed processing system. The controller **144** includes functional components that communicate across a system interconnect of one or more conductors or fiber optic fabric that for clarity is depicted as a system bus **156.** System bus **156** may include a data bus, address bus, and control bus for communicating data, addresses and control information between any of these coupled units. Functional components of the controller **144** can include a processor subsystem **158** consisting of one or more central processing units (CPUs), digital signal processor/s (DSPs) and processor memory. Processor subsystem **158** may include any instrumentality or aggregate of instrumentalities operable to compute, classify, process, transmit, receive, retrieve, originate, switch, store, display, manifest, detect, record, reproduce, handle, or utilize any form of information, intelligence, or data for business, scientific, control, or other purposes including control of automation equipment of a material handling system.

In accordance with various aspects of the disclosure, an element, or any portion of an element, or any combination of elements may be implemented with processor subsystem **158** that includes one or more physical devices comprising processors. Non-limiting examples of processors include microprocessors, microcontrollers, digital signal processors (DSPs), field programmable gate arrays (FPGAs), programmable logic devices (PLDs), programmable logic controllers (PLCs), state machines, gated logic, discrete hardware circuits, and other suitable hardware configured to perform the various functionality described throughout this disclosure. One or more processors in the processing system may execute instructions. A processing system that executes instructions to effect a result is a processing system which is configured to perform tasks causing the result, such as by providing instructions to one or more components of the processing system which would cause those components to perform acts which, either on their own or in combination with other acts performed by other components of the processing system would cause the result.

Controller **144** may include a network interface (I/F) device **160** that enables controller **144** to communicate or interface with other devices, services, and components that are located external to controller **144,** such as WES **148.** These networked devices, services, and components can interface with controller **144** via an external network, such as example network **162,** using one or more communication protocols. Network **162** can be a local area network, wide area network, personal area network, and the like, and the connection to and/or between network and controller **144** can be wired or wireless or a combination thereof. For purposes of discussion, network **162** is indicated as a single collective component for simplicity. However, it is appreciated that network **162** can comprise one or more direct connections to other devices as well as a more complex set of interconnections as can exist within a wide area network, such as the Internet or on a private intranet. Various links in the network **162** can wired or wireless. Controller **144** can communicate via a device interface **168** with a number of on-board devices such as lights, indicators, manual controls, etc. Device interface **168** can include wireless links and wired links. For example, the controller **144** can direct the extendable conveyor **112** follow the robotic material handling system **100** into the carton pile container **108** or to lead the robotic material handling system **100** out of the carton pile container **108.**

Controller **144** can include several distributed subsystems that manage particular functions of the robotic material handling system **100.** An automation controller **170** can receive location and spatial calibration information from the 3D/2D carton detection system **166** and use this data to coordinate movement of the mobile body **114** via a vehicle interface **172** and movement by payload components such as robotic arm assembly **102** and the lift **140** that moves the front portion **142** of the conveyor system **110.** The controller **144** may further include a payload interface **174.**

The 3D/2D carton detection system **166** can include depth sensing using binocular principles, radar principles, or sonar principles. To avoid dependency on consistent ambient lighting conditions, an illuminator **169** can provide a consistent or adjustable amount of illumination in one or more spectrum bandwidths such as visual light or infrared. The illumination can be narrowly defined in the visual spectrum enabling filtration of most of the ambient light. Alternatively, the illumination can be outside of the visual range such that the illumination is not distracting to human operators. The 3D/2D carton detection system **166** can receive 2D and 3D sensor data from front RGB-D sensors **176** that view an interior of the carton pile container **108** and the carton pile **106.** Nose 3D/2D sensor(s) **178** can view the front portion **142** of the conveyor system **110** to detect dimensions of and where cartons **104** are received for purposes such as jam mitigation, efficient singulation control of side-by-side cartons **104,** etc. For these and other purposes, the 3D/2D carton detection system **166** can include various applications or components that perform processes described later in the present application. For example, the 3D/2D carton detection system **166** can include a 2D process module **180,** a 3D process module **182,** 3D-guided 2D process module **184,** a detection sector/quadrant combiner module **186,** and a conveyor zone singulation module **188.**

System memory **164** can be used by processor subsystem **158** for holding functional components such as data and software such as a 3D/2D carton detection system **166.** Software may be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, function block diagram (FBD), ladder diagram (LD), structured text (ST), instruction list (IL), and sequential function chart (SFC) or otherwise. The software may reside on a computer-readable medium.

For clarity, system memory **164** can include both random access memory, which may or may not be volatile, nonvolatile data storage. System memory **164** contain one or more types of computer-readable medium, which can be a non-transitory. Computer-readable medium includes, by way of example, a magnetic storage device (e.g., hard disk, floppy disk, magnetic strip), an optical disk (e.g., compact disk (CD), digital versatile disk (DVD)), a smart card, a flash memory device (e.g., card, stick, key drive), random access memory (RAM), read only memory (ROM), programmable ROM (PROM), erasable PROM (EPROM), electrically erasable PROM (EEPROM), a register, a removable disk, and any other suitable medium for storing software and/or instructions that may be accessed and read by a computer. The computer-readable medium may be resident in the processing system, external to the processing system, or distributed across multiple entities including the processing system. The computer-readable medium may be embodied in a computer-program product. By way of example, a computer-program product may include a computer-readable medium in packaging materials. Those skilled in the art will recognize how best to implement the described functionality presented throughout this disclosure depending on the particular application and the overall design constraints imposed on the overall system.

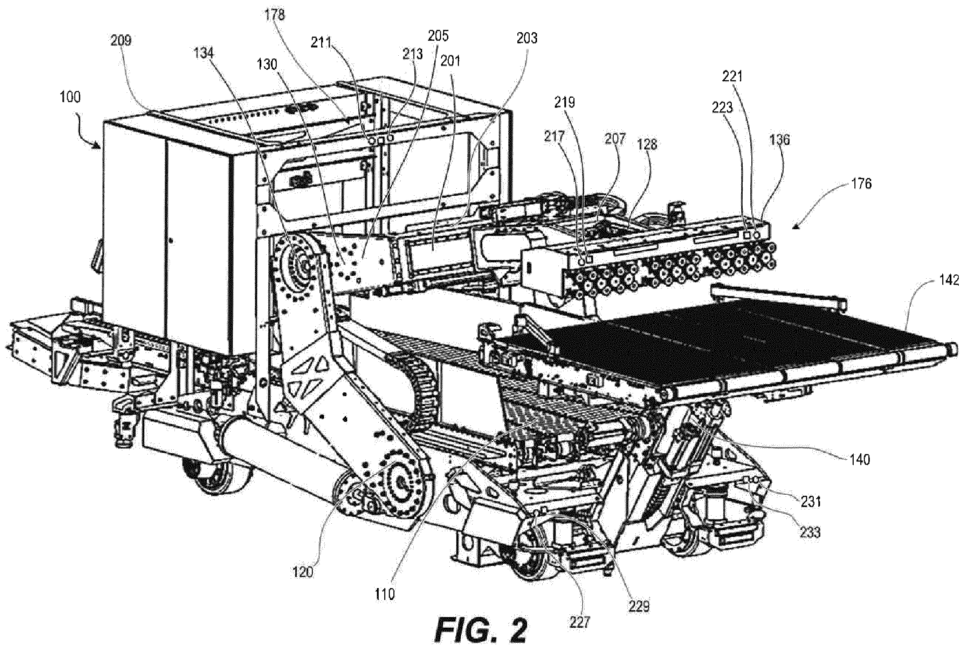

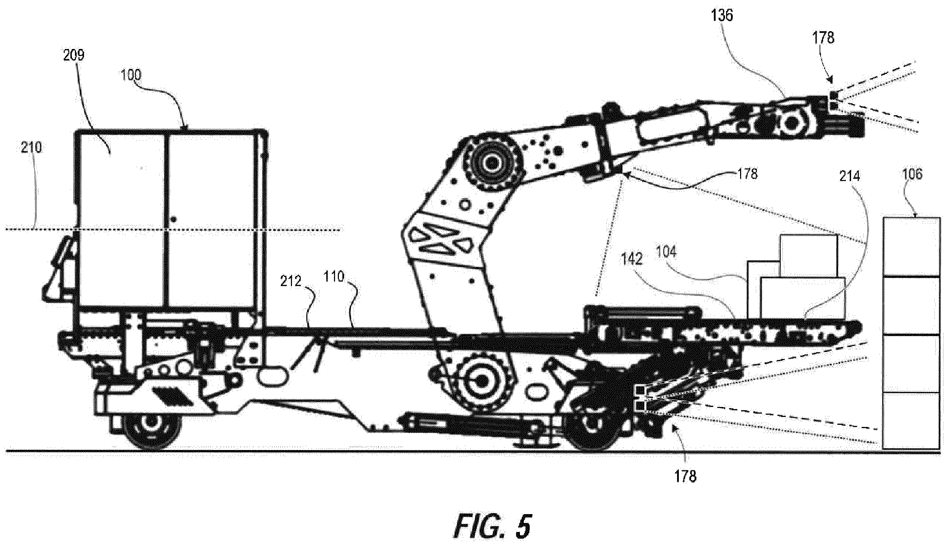

**FIG. 2** illustrates that the upper arm assembly **128** of the robotic material handling system **100** includes a rotatable gantry **201** having the rear end **130** pivotally attached at the upper arm axis **134** to the left and right lower arms **120.** A central mounting surface **135** extends below the rotatable gantry **201.** The rotatable gantry **201** has a lateral guide **203** at an extended end **205.** The upper arm assembly **128** includes an end arm **207** proximally attached for lateral movement to the lateral guide **203** of the rotatable gantry **201** and distally attached to the manipulator head **136.** The end arm **207** laterally translates to reach an increased lateral area. Thereby a lighter weight and more maneuverable manipulator head **136** can be employed. **FIGs. 2 - 5** illustrate that an equipment cabinet **209** arches over a rearward conveyor **212** of the conveyor system **110.** With particular reference to **FIG. 5****,** clearance under the equipment cabinet **209** defines a jam height **210** that can be determined based upon sensor data from nose 3D/2D sensors **178** mounted on the equipment cabinet **209** for any cartons received on a nose conveyor surface **214** of the front portion **142** of the conveyor system **110.**

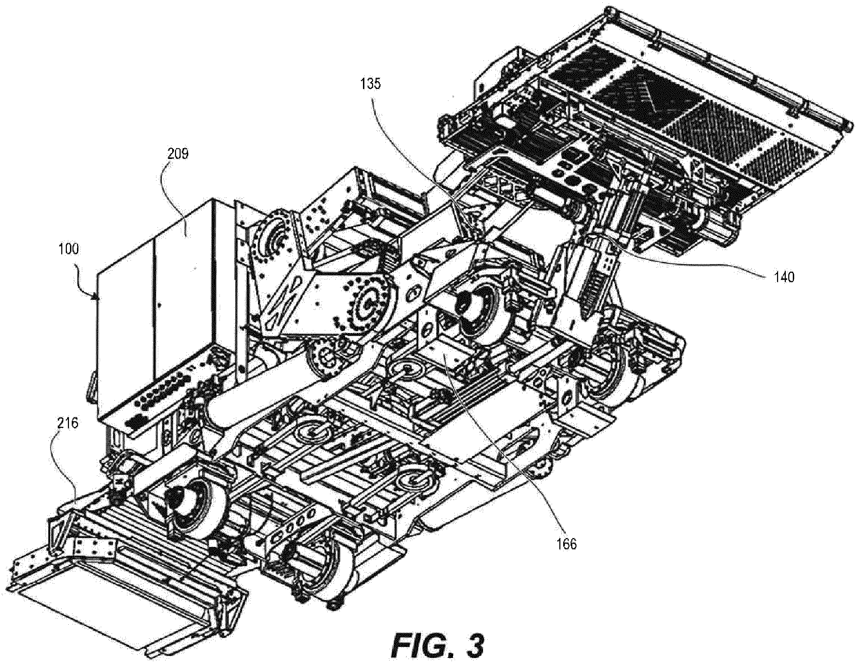

In an exemplary embodiment, For example, the nose 3D/2D sensors **178** can include right nose sensor **211** that views a right side of the nose conveyor surface **214** and a left nose sensor **213** that views a left side of the nose conveyor surface **214.** Each nose sensor **211, 213** can include one or more of a 2D infrared sensor, a 3D depth sensor, and a 2D RGB sensor. Front 3D/2D sensors **176** can include spatially separated sensors that operate in different spectrum and dimensions in order to detect articles such as product, cartons, boxes, cases, totes, etc., (cartons **104)** under a number of stacking arrangements, lighting conditions, etc. Mounting sensors on the end effector (manipulator head **136)** also allows varying a vantage point, such as looking downward onto the carton pile **106** to better differentiate top-most cartons **104.** With particular reference to **FIG. 3****,** a laterally-shifting transition conveyor **216** conveys articles from the rearward conveyor **212** onto the extendable conveyor **112.**

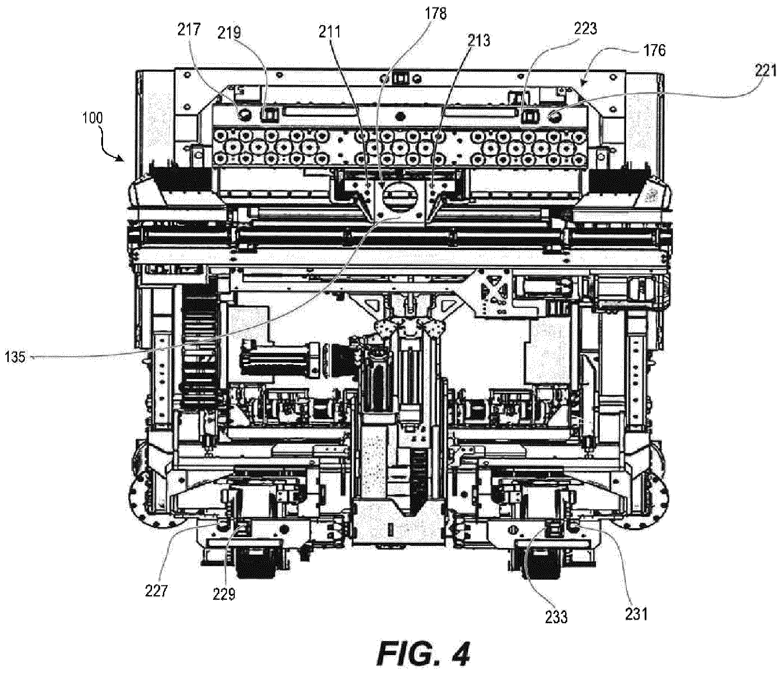

With particular reference to **FIGs. 2** and **4****,** in an exemplary embodiment the front 3D/2D sensors **176** include a top left 2D sensor **217,** a top left 3D sensor **219,** a top right 2D sensor **221,** and a top right 3D sensor **223** on the manipulator head **136.** The front 3D/2D sensors **176** include bottom left 2D sensor **227,** a bottom left 3D sensor **229,** a bottom right 2D sensor **231,** and a bottom right 3D sensor **233** on the front end of the mobile body **114.**

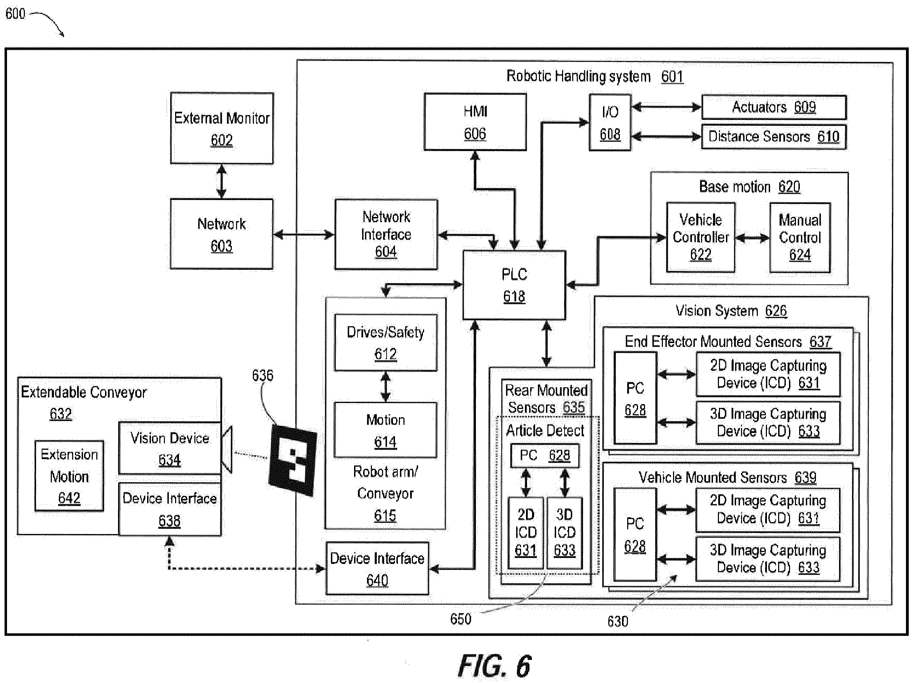

**FIG. 6** illustrates exemplary components of a material handling system **600** that includes robotic material handling system **601** suitable for use in various embodiments. The robotic material handling system **601** may include an external monitor **602,** a network interface module **604,** an human machine interface (HMI) module **606,** an input/output module (I/O module **608),** a robotic arm and a conveyor system **615** that includes a drives/safety module **612** and a motion module **614,** a programmable logic controller (or PLC **618),** a base motion module **620** that includes a vehicle controller module **622** and a manual control module **624,** and a vision system **626** (or visualization system) that may include one or more personal computing devices **628** (or "PCs") and sensor devices **630.** In some embodiments, vision system **626** of the robotic material handling system **601** may include a PC **628** connected to each sensor device **630.** In embodiments in which more than one sensor device **630** is present on the robotic material handling system **601,** the PCs **628** for each sensor device **630** may be networked together and one of the PCs **628** may operate as a master PC **628** receiving data from the other connected PCs **628,** may perform data processing on the received data and its own data (e.g., coordinate transformation, duplicate elimination, error checking, etc.), and may output the combined and processed data from all the PCs **628** to the PLC **618.** In some embodiments, the network interface module **604** may not have a PLC inline between itself and the PC **628,** and the PLC **618** may serve as the Vehicle Controller and/or Drives/Safety system. Sensor devices **630** can include 2D image capturing devices (ICDs) **631** and 3D image capturing devices (ICDs) **633** segregated into sectors for different viewing portions or vantage points. Subsets can include rear mounted sensors **635,** end effector mounted sensors **637,** and vehicle mounted sensors **639.**

The robotic material handling system **601** may connect to remote locations or systems with the network interface module **604** (e.g., a Wi-Fi^{™} radio, etc.) via a network **603,** such as a local area Wi-Fi^{™} network. In particular, the network interface module **604** may enable the robotic material handling system **601** to connect to an external monitor **602.** The external monitor **602** may be anyone of a remote warehouse or distribution center control room, a handheld controller, or a computer, and may provide passive remote viewing through the vision system **626** of the robotic material handling system **601.** Alternately, the external monitor **602** may override the programming inherent in the vision system **626** and assume active command and control of the robotic material handling system **601.** Programming for the robotic material handling system **601** may also be communicated, operated and debugged through external systems, such as the external monitor **602.** Examples of an external monitor **602** that assumes command and control may include a remotely located human operator or a remote system, such as a warehouse or distribution server system (i.e., remote device as described above). Exemplary embodiments of using an external monitor **602** to assume command and control of the robotic material handling system **601** may include human or computer intervention in moving the robotic material handling system **601,** such as from one unloading bay to another, or having the external monitor **602** assume control of the robotic arm to remove an item (e.g., box, carton, etc.) that is difficult to unload with autonomous routines. The external monitor **602** may include any of: a visual monitor, a keyboard, a joystick, an I/O port, a CD reader, a computer, a server, a handheld programming device, or any other device that may be used to perform any part of the above described embodiments.

The robotic material handling system **601** may include a human machine interface module **606** (or HMI module **606)** that may be used to control and/or receive output information for the robot arm and conveyor system **615** and/or the base motion module **620.** The HMI module **606** may be used to control (or may itself include) a joystick, a display, and a keypad that may be used for re-programming, over-riding the autonomous control of the machine, and driving the robotic material handling system **601** from point to point. Actuators **609** may be actuated individually or in any combination by the vision system **626** via the I/O module **608,** and distance sensors **610** may be used to assist in guiding the robotic material handling system **601** into an unloaded area (e.g., a trailer). The I/O module **608** may connect the actuators **609** and distance sensors **610** to the PLC **618.** The robotic arm and conveyor system **615** may include all components needed to move the arm and/or the conveyor, such as drives/engines and motion protocols or controls. The base motion module **620** may be the components for moving the entirety of the robotic material handling system **601.** In other words, the base motion module **620** may be the components needed to steer the vehicle into and out of unloading areas.

The PLC **618** that may control the overall electromechanical movements of the robotic material handling system **601** or control exemplary functions, such as controlling the robotic arm or a conveyor system **615.** For example, the PLC **618** may move the manipulator head of the robotic arm into position for obtaining items (e.g., boxes, cartons, etc.) from a wall of items. As another example, the PLC **618** may control the activation, speed, and direction of rotation of kick rollers, and/or various adjustments of a support mechanism configured to move a front-end shelf conveyor, such as front portion **142** of conveyor system **110 (****FIG. 1****).** The PLC **618** and other electronic elements of the vision system **626** may mount in an electronics box (not shown) located under a conveyor, adjacent to a conveyor, or elsewhere on the robotic material handling system **601.** The PLC **618** may operate all or part of the robotic material handling system **601** autonomously and may receive positional information from the distance sensors (not shown). The I/O module **608** may connect the actuators and the distance sensors **610** to the PLC **618.**

The robotic material handling system **601** may include a vision system **626** that comprises sensor devices **630** (e.g., cameras, microphones, 3D sensors, etc.) and one or more computing device **628** (referred to as a personal computer or "PC" **628).** The robotic material handling system **601** may use the sensor devices **630** and the one or more PC **628** of the vision system **626** to scan in front of the robotic material handling system **601** in real time or near real time. The forward scanning may be triggered by the PLC **618** in response to determining the robotic material handling system **601,** such as a trigger sent in response to the robotic material handling system **601** being in position to begin detecting cartons in an unloading area. The forward scanning capabilities may be used for collision avoidance, sent to the human shape recognition (safety), sizing unloaded area (e.g., the truck or trailer), and for scanning the floor of the unloaded area for loose items (e.g., cartons, boxes, etc.). The 3D capabilities of the vision system **626** may also provide depth perception, edge recognition, and may create a 3D image of a wall of items (or carton pile). The vision system **626** may operate alone or in concert with the PLC **618** to recognize edges, shapes, and the near/far distances of articles in front of the robotic material handling system **601.** For example, the edges and distances of each separate carton in the wall of items may be measured and calculated relative to the robotic material handling system **601,** and vision system **626** may operate alone or in concert with the PLC **618** to may select specific cartons for removal.

In some embodiments, the vision system **626** may provide the PLC **618** with information such as: specific XYZ coordinate locations of cartons targeted for removal from the unloading area, and one or more movement paths for the robotic arm or the mobile body of the robotic material handling system **601** to travel. The PLC **618** and the vision system **626** may work independently or together such as an iterative move and visual check process for carton visualization, initial homing, and motion accuracy checks. The same process may be used during vehicle movement, or during carton removal as an accuracy check. In an embodiment, the vision system **626** detects the cartons and communicates that information to the PLC 618. The PLC 618 then uses the information to independently plan and execute carton retrieval. In another embodiment, the vision system **626** and the PLC **618** monitor the detected cartons over the movement path to evaluate any deviation from the movement path. Further, the visual check process may include, but is not limited to, performing image processing on data captured by the vision system **626** to determine a location, size, and/or orientation of any carton(s) targeted for removal from the unloading area. Alternatively, the PLC **618** may use the move and visualize process as a check to see whether one or more cartons have fallen from the carton pile or repositioned since the last visual check. While various computing devices and/or processors in **FIG. 6****,** such as the PLC **618,** vehicle controller module **622,** and PC **628,** have been described separately, in the various embodiments discussed in relation to **FIG. 6** and all the other embodiments described herein, the described computing devices and/or processors may be combined and the operations described herein performed by separate computing devices and/or processors may be performed by less computing devices and/or processors, such as a single computing device or processor with different modules performing the operations described herein. As examples, different processors combined on a single circuit board may perform the operations described herein attributed to different computing devices and/or processors, a single processor running multiple threads/modules may perform operations described herein attributed to different computing devices and/or processors, etc.

An extendable conveyor system **632** can convey articles from the robotic material handling system **601** to other portions of a material handling system **600.** As the robotic material handling system **601** advances towards or retreats from the unloading area, a vision device **634** on one of the extendable conveyor system **632** and robotic material handling system **601** can capture an image of a target **636** within the field of view of the vision device **634.** Vision system **626** can perform image processing to detect changes in size, orientation and location of the target **636** within the field of view of the vision device **634.** Device interfaces **638, 640** respectively of the extendable conveyor system **632** and the robotic material handling system **601** can convey vision information or movement commands. For example, PLC **618** can command an extension motion actuator **642** on the extendable conveyor system **632** to correspond to movements of the robotic material handling system **601** to keep the extendable conveyor system **632** and the robotic material handling system **601** in alignment and in proper spacing. In one embodiment, the device interfaces **638, 640** utilize a short range wireless communication protocol such as a Personal Access Network (PAN) protocol. Examples of PAN protocols which may be used in the various embodiments include Bluetooth^{®}, IEEE 802.15.4, and Zigbee^{®} wireless communication protocols and standards.

The rear mounted sensors **635,** 2D ICDs **631,** 3D ICD **633** and associated PC **628** can perform as an article detection system **650** to detect articles that have been placed onto robotic material handling system **601.** In order to increase throughput or due to possible tumbling of poorly stacked articles of a carton pile, a number of articles can be placed on a front portion of the robotic material handling system **601** that cannot be simultaneously conveyed to the rear without possible jamming. However, the article detection system **650** avoids the need to individually singulate each article or carton to one side or the center of a robotic material handling before then conveying a train of singulated articles. The article detection system **650** can move more than one article at a time rearward to take advantage of an inherent descrambling capability of the robotic material handling system **601.**

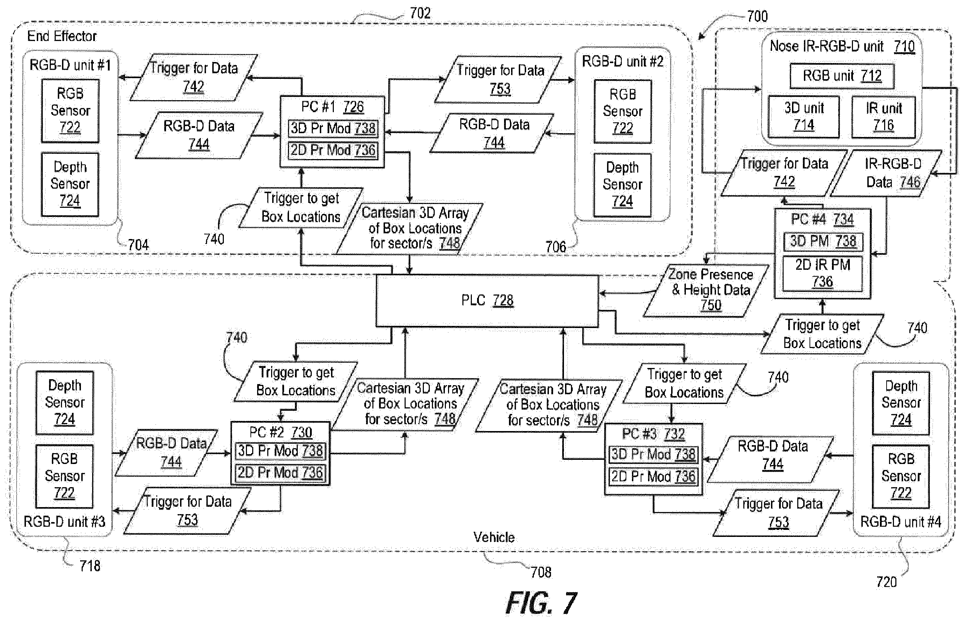

**FIG. 7** illustrates a data flow within an example vision system **700** of the robotic material handling system **100 (****FIG. 1****).** An end effector **702** includes a first RGD-D unit **704** and a second RGD-D unit **706.** A vehicle **708** includes a nose IR-RGB-D unit **710** positioned for conveyor screening and including an RGB unit **712,** a 3D unit **714,** and an IR unit **716.** The vehicle **708** includes a third RGB-D unit **718** and a fourth RGB-D unit **720,** each having an RGB sensor **722** and a depth sensor **724.** A first PC **726** is in communication with the first and second RGD-D units **704, 706** and with a PLC **728** that performs automation control of the robotic material handling system **100 (****FIG. 1****).** A second PC **730** is in communication with the third RGB-D unit **718** and PLC **728.** A third PC **732** is in communication with the fourth RGB-D unit **720** and PLC **728.** A fourth PC **734** is in communication with the fourth RGB-D unit **720** and PLC **728.** The first, second, third and fourth PCs **726, 730, 732, 734** each include 2D process module **736** and a 3D process module **738.** PLC **728** sends a trigger signal **740** to each of the first, second, third and fourth PCs **726, 730, 732, 734.** Each of the first, second, third and fourth PCs **726, 730, 732, 734** in turn send a trigger signal **742** for data to respectively assigned first, second, third and fourth RGB-D units **704, 706, 718, 720** and nose IR-RGB-D unit **710.** The first, second, third and fourth RGB-D units **704, 706, 718, 720** respond with RGB-D data **744.** The nose IR-RGB-D unit **710** responds with IR-RGB-D data **746.** The first, second, and third PCs **726, 730, 732** analyze RGB-D data **744** and provide a Cartesian 3D array **748** of box locations for assigned sectors or quadrants. Fourth PC **734** analyzes the IR-RGB-D data **746** and produces zone presence and height data **752.** PLC **728** can consolidate this data or one of the first, second, third and fourth PCs **726, 730, 732, 734** can perform this role for the PLC **728.**

In one aspect of the present disclosure, a vision system is used for product detection on conveyance systems using 3D sensors. A conveyor screening operation determines the presence of product on the conveyor to enable discharge speed improvements. Conveyor screening also provides product jam detection and "too tall" detection. A conveyor that has individually-controllable zones enables optimized singulation to reduce cycle time and to increase throughput of a robotic material handling system. An occupancy array generated by the conveyor screening application can be converted into sequenced vectors that sequence the product off of the conveyor in an expedited fashion without creating a jam. 3D sensors, infrared sensors, depth sensors, etc., can be individually used or used in combination to achieve better product detection than realized by simple presence sensing devices such as photoeyes or single vantage point 2D Light Detection and Ranging (LIDAR) sensors that can fail to detect occluded products. By utilizing 3D area scanners mounted above the conveyor, the vision system can avoid or mitigate such occlusions. With product correctly identified by position and height on the conveyor, automation controls can sequence a series of individually-controlled singulating belts of the conveyor to speed the time to discharge products. In addition, knowing the heights of the products can be used to prevent downstream jamming without the need for additional sensors. For example, a threshold height can be set based upon a downstream height constraint of the material handling system. This functionality can be expanded with additional tracking to more accurately count the number of cases on the conveyor even when these cases are side by side, which is a common challenge faced in the distribution and parcel industry.

Sensor setup for conveyor screening for product detection provides more accurate information relating to items on the conveyor, which allows for smarter operation of conveyor system. Sensor system provides case height information so that it can serve as a too tall detection sensor, thus eliminating additional sensors, and provides an improvement over the traditional 2D LiDAR's which have limitations in providing detections only in 2D space. System that yields Improved Case counts.

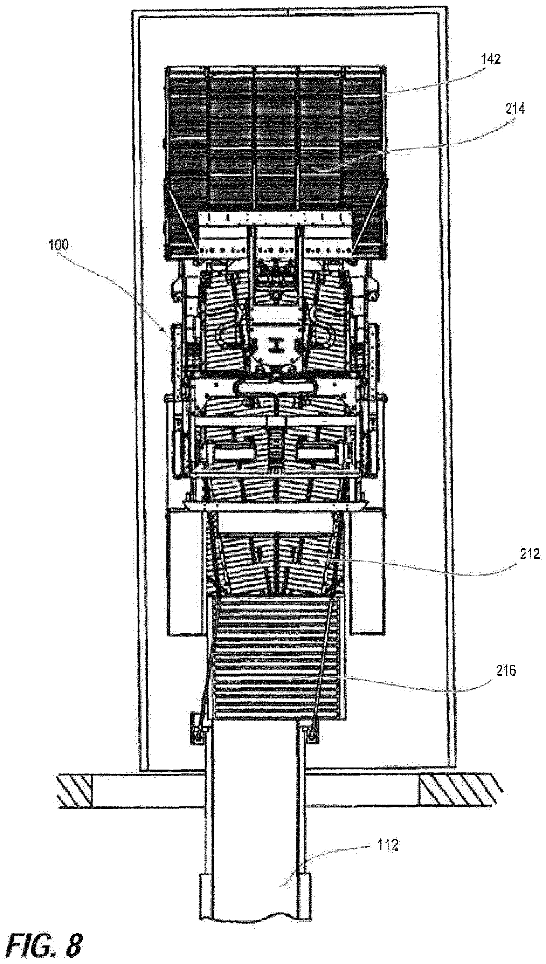

**FIG. 8** illustrates the robotic material handling system **100** having the front portion **142** of the conveyor system **110** that is capable of longitudinally separating articles (not shown) in an expeditious fashion without jamming or overwhelming the rearward conveyor **212.** The rearward conveyor **212** is narrower than nose conveyor surface **214** and conveys articles via laterally-shifting transition conveyor **216** onto the extendable conveyor **112.**

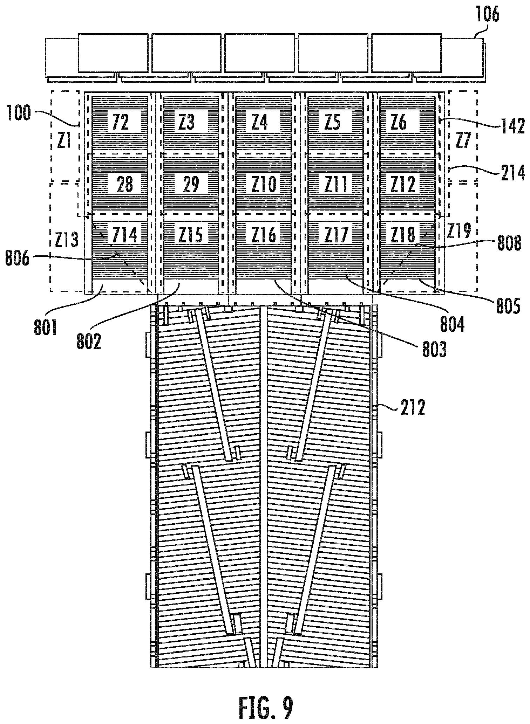

**FIG. 9** illustrates the nose conveyor surface **214** can be placed proximate to a carton or carton pile **106.** The nose conveyor surface **214** has five individually controllable and variable speed conveyors that are longitudinally aligned and laterally adjacent to one another. In particular from left to right, the nose conveyor surface **214** includes a first parallel conveyor 801, second parallel conveyor **802,** third parallel conveyor **803,** fourth parallel conveyor **804,** fifth parallel conveyor **805.** The rearward conveyor **212** is narrower than the nose conveyor surface **214.** Thus, a left diverter **806** diverts articles from the first parallel conveyor **801** onto the second parallel conveyor **802** and a right diverter **808** diverts articles from the fifth parallel conveyor **805** onto the fourth parallel conveyor **804.** The left diverter **806** and the right diverter **808** may be fixed or may be movable.

For selectively operating each parallel conveyor **801** - **805** at a speed appropriate to convey articles without jamming, the article detection system **650 (****FIG. 6****)** scans the nose conveyor surface **214.** In one embodiment, each parallel conveyor **801 - 805** is scanned in three zones: (i) distal zone, (ii) center zone, and (iii) proximal zone. In particular, the first parallel conveyor **801** (or "B1") has distal zone **Z2,** center zone **Z8** and proximal zone **Z14.** The second parallel conveyor **802** (or "B2") has distal zone **Z3,** center zone **Z9** and proximal zone **Z15.** The third parallel conveyor **803** (or "B3") has distal zone **Z4,** center zone **Z10** and proximal zone **Z16.** The fourth parallel conveyor **804** (or "B4") has distal zone **Z5,** center zone **Z11** and proximal zone **Z17.** The fifth parallel conveyor **805** (or "B5") has distal zone **Z6,** center zone **Z12** and proximal zone **Z18.** For detecting articles inadvertently displaced laterally off of the nose conveyor surface, the article detection system **650 (****FIG. 6****)** scans a left distal zone **Z1** and a left proximal zone **Z13** adjacent to the first parallel conveyor **801.** The article detection system **650 (****FIG. 6****)** also scans a right distal zone **Z7** and a left proximal zone **Z19** adjacent to the fifth parallel conveyor **805.** For detecting an article from the scanned image, the article detection system **650** evaluates a 3D data of the scanned image against a 3D data of a trained profile of an empty nose conveyor surface.

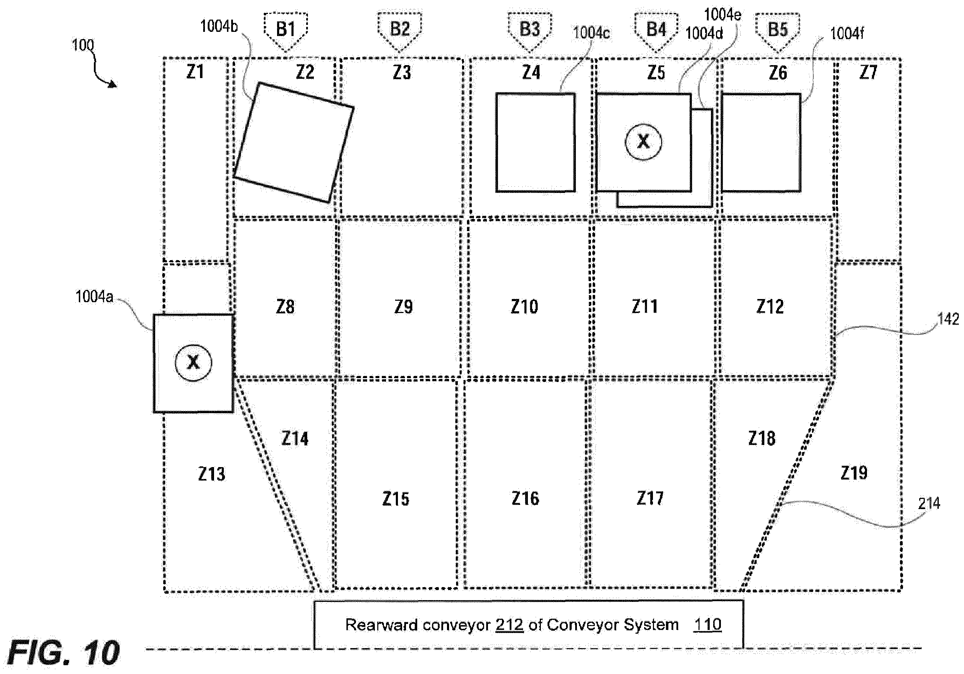

**FIG. 10** illustrates a scenario **1000** wherein articles have been received or have moved to various zones on the nose conveyor surface **214** that warrant selective conveying to avoid jams or damaged product. Carton **1004a** in zone **Z13** can represent an article that has fallen off of the front portion **142** of the robotic material handling system **100.** A failure indication can be used to prevent a movement of the robotic material handling system **100** that could damage the carton **1004a.** An automatic, telecontrol, or manual response can be triggered retrieve the carton **1004a.** Carton **1004b** in zone **Z2,** which is the distal zone of Bl, is the only carton on the left side of the nose conveyor surface **214.** Recognizing this situation, the robotic material handling system **100** can expedite rearward conveyance at a first speed, which is a full conveying speed. Carton **1004c** in distal zone **Z4** of B3 is in the center of the nose conveyor surface **214.** In an exemplary embodiment, the robotic material handling system **100** can begin conveying any article that may be on the center portion of the nose conveyor surface **214** while the nose conveyor surface **214** is homing. The nose conveyor surface **214** can be angled or lifted to be closer to the particular cartons that are being robotically moved. While robotic manipulator (not shown) is repositioning for another operation, the nose conveyor surface **214** can be moving back into alignment with the rearward conveyor **212.** Alternatively, a transition plate (not shown) can guide cartons from the nose conveyor surface **214** onto the rearward conveyor **212.** Stacked cartons **1004d, 1004e** are in distal zone **Z5** of B4. Article detection system **650 (****FIG. 6****)** can recognize that this cartons **1004d, 1004e** are too tall to be conveyed rearward without jamming or being damaged for insufficient clearance. A fault indication can prompt an automatic, telecontrol, or manual response to unstack the cartons **1004d, 1004e** for example. In other instances, a tall article may require repositioning to achieve a lower height or manual carry. Carton **1004f** in distal zone **Z6** of B5 is a carton that should not be conveyed rearward at the same speed with any cartons in B4 due to possible jamming upon diversion from B5 onto B4.

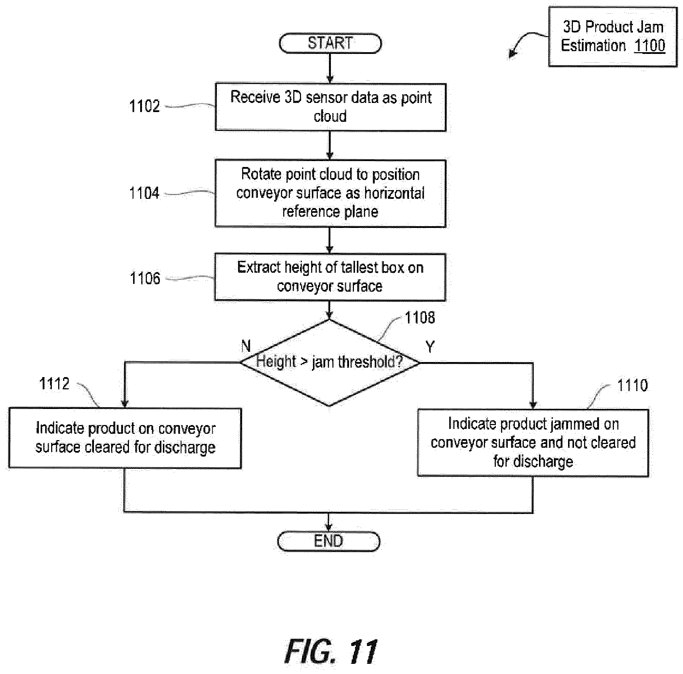

**FIG. 11** illustrates a method **1100** of performing product jam detection of the front singulating portion of the robotic material handling system using 3D sensor data, according to one or more embodiments. Method **1100** includes receiving 3D sensor data, from the nose IR-RGB-D unit **710** as shown in **FIG. 7****,** as a point cloud (block **1102).** Method **1100** includes rotating point cloud to position conveyance surface as horizontal reference plane (block **1104).** Method **1100** includes extracting height of tallest box on conveyor surface (block **1106).** In an embodiment, the orientation of the nose conveyor surface **214** is used to calculate a transformation for the 3D sensor data. That transformed 3D sensor data is then used in each data capture for the calculation of a detected object height. Thus, based on the detected object height of one or more boxes, the height of tallest box conveyor surface is extracted. Method **1100** includes determining whether the extracted height is greater than a jam height threshold (decision block **1108).** In response to determining that the extracted height is greater than a jam height threshold in decision block **1108,** method **1100** includes indicating a product jammed on conveyor surface and not cleared for discharge (block **1110).** Then method **1100** ends. In response to determining that the extracted height is not greater than a jam height threshold in decision block **1108,** method **1100** includes indicating product on conveyor surface is cleared for discharge (block **1112).** Then method **1100** ends.

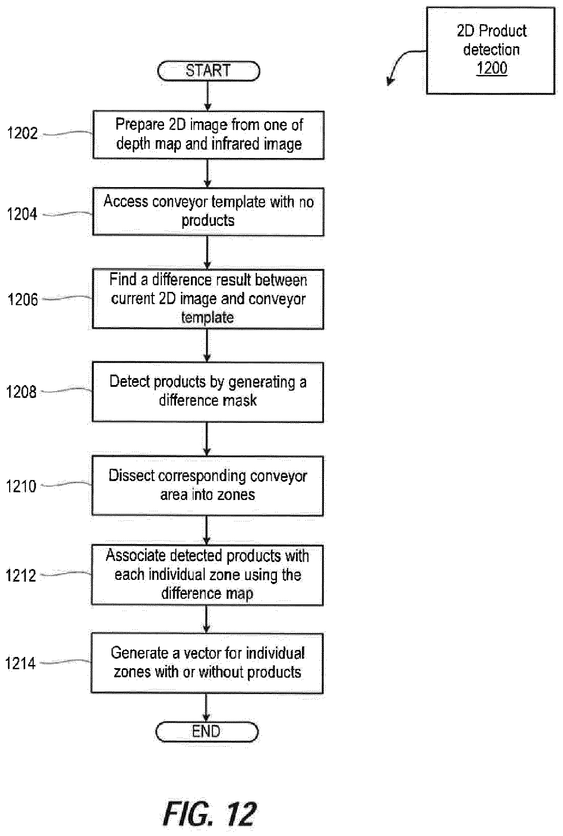

**FIG. 12** illustrates a method **1200** of detecting product or articles in individual zones of the front portion of the robotic material handling system using one of depth map and infrared imagery. In one or more embodiments, method **1200** includes preparing 2D image from one of depth map and infrared image generated based on data received from the front 3D/2D sensors 176 as shown in **FIG. 2** and **4** (block **1202).** Method **1200** includes accessing conveyor template with no products having 3D data of a trained profile of an empty nose conveyor surface 214 (block **1204).** Method **1200** includes finding a difference result between current 2D image and conveyor template (block **1206).** Method **1200** includes detecting products by generating a difference mask (block **1208).** Method **1200** includes dissecting corresponding conveyor area of the 2D image into zones (block **1210).** Method **1200** includes associating detected products with each individual zone using the difference mask (block **1212).** Method **1200** includes generating a vector including an array of zones on the nose conveyor surface 214 indicating object detection for individual zones (block **1214).** Method **1200** ends.

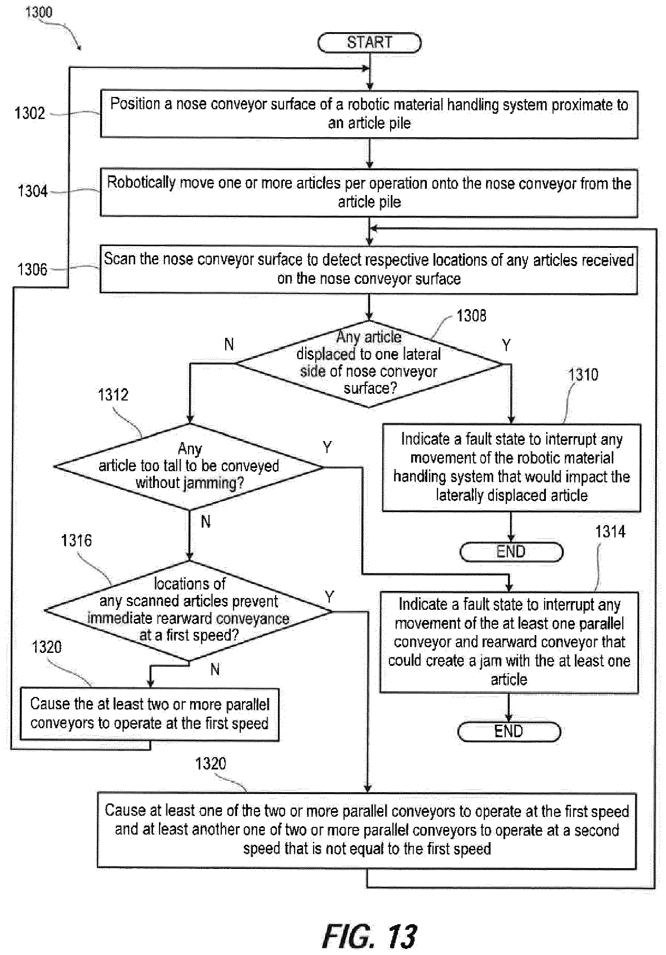

**FIG. 13** illustrates a method **1300** of conveying articles on a robotic material handling system. In one or more embodiments, the method **1300** includes positioning a nose conveyor surface of a robotic material handling system proximate to an article pile (block **1302).** The nose conveyor surface has two or more parallel conveyors that are distal to and proximally feed a rearward conveyor that is laterally narrower than the nose conveyor surface. In one or more embodiments, one of the parallel conveyors is diverted onto another one of the at least two parallel conveyors, which should not be allowed to already have an article present at the diversion location. Method **1300** includes robotically moving one or more articles per operation onto the nose conveyor from the article pile (block **1304).** Method **1300** includes scanning the nose conveyor surface to detect respective locations of any articles received on the nose conveyor surface (block **1306).** Method **1300** includes determining whether any article is displaced to one lateral side of the nose conveyor surface (decision block **1308).** In response to determining that any article is displaced to one lateral side of the nose conveyor surface in decision block **1308,** method **1300** includes indicating a fault state to interrupt any movement of the robotic material handling system that would impact the displaced at least one article (block **1310).** Then method **1300** ends. In response to determining that any article is not displaced to one lateral side of the nose conveyor surface in decision block **1308,** method **1300** includes determining whether any article is too tall to be conveyed without jamming (decision block **1312).** In response to determining that at least one article is too tall to be conveyed without jamming in decision block **1312,** then method **1300** includes indicating a fault state to interrupt any movement of the at least one parallel conveyor and rearward conveyor that could create a jam with the at least one article (block **1314).** Then method **1300** ends.

In response to determining that no article is too tall to be conveyed without jamming in decision block **1312,** then method **1300** includes determining whether the respective locations of any scanned articles prevent immediate rearward conveyance by the two or more parallel conveyors at a first speed (decision block **1316).** In response to determining that the respective locations of any scanned articles prevent immediate rearward conveyance in decision block **1312,** method **1300** includes causing at least one of the two or more parallel conveyors to operate at the first speed and at least another one of two or more parallel conveyors to operate at a second speed that is not equal to the first speed (block **1318).** Then method **1300** returns to block **1306** to monitor whether locations of articles warrant a change in operation of the nose conveyor surface. In an exemplary embodiment, articles closer to the center of the nose conveyor surface run faster than those to the outside when two articles such as cartons need to be singulated. However, in one or more embodiments, outside articles can be conveyed at a greater speed to singulate in front of inside articles. In an embodiment, the speed of the conveyance of articles is determined based on the detected product placement and analysis of product location, size, and/or volume.

In response to determining that the respective locations of any scanned articles do not prevent immediate rearward conveyance in decision block **1316,** method **1300** includes causing the at least two or more parallel conveyors to operate at the first speed (block **1320).** Then method **1300** returns to block **1302** to unload more articles. For example, one article can be present on the at least two parallel conveyors and thus any possible parallel conveyor that the article may contact can run at a fast speed to clear the nose conveyor surface as quickly as possible, without a possibility of two articles impeding each other at the rearward conveyor. For example, the rearward conveyor can have a capability of descrambling articles and creating a singulated train of articles if not fed with side-by-side articles.

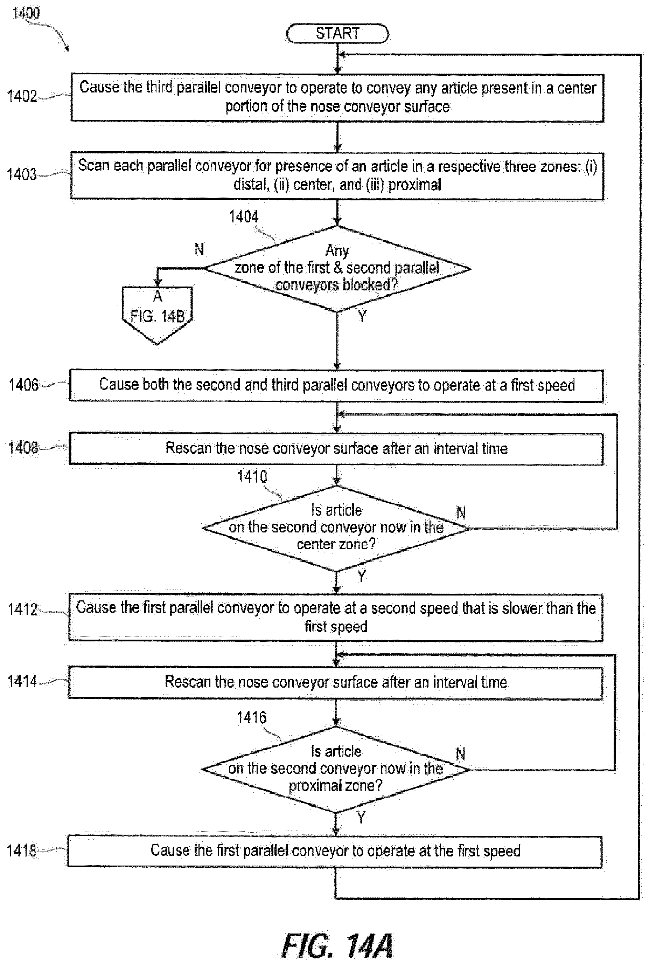

**FIGs. 14A** - **14B** illustrates an exemplary method for an embodiment of a robotic material handling system with a nose conveyor surface having first, second, third, fourth and fifth parallel conveyors. The first parallel conveyor diverts onto the second parallel conveyor and the fifth parallel conveyor diverts onto the fourth parallel conveyor. In one or more embodiments, method **1400** includes causing the third parallel conveyor to operate to convey any article present in a center portion of the nose conveyor surface (block **1402).** As shown in **FIG. 14A****,** method **1400** includes scanning each parallel conveyor for presence of an article in a respective three zones: (i) distal, (ii) center, and (iii) proximal (block **1403).** Method **1400** includes determining whether one side of the nose conveyor surface is blocked in any zone of the first and second parallel conveyors, that is, at least one article is on that zone (decision block **1404).** In response to determining that one side of the nose conveyor surface is blocked in any zone of the first and second parallel conveyors in decision block **1404,** method **1400** includes causing both the second and third parallel conveyors to operate at a first speed (block **1406).** First, fourth and fifth parallel conveyors remain stationary. Method **1400** includes rescanning the nose conveyor surface after an interval time (block **1408).** Method **1400** includes determining whether at least a portion of the second parallel conveyor is empty adjacent to the first article on the second parallel conveyor by detecting that the article on the second conveyor is now in the center zone (decision block **1410).** In response to determining that the article on the second conveyor has not yet moved from the distal zone to the center zone in decision block **1410,** method **1400** returns to block **1408** to wait and to rescan. In response to determining that the article on the second conveyor has moved from the distal zone to the center zone in decision block **1410,** method **1400** includes causing the first parallel conveyor to operate at a second speed that is slower than the first speed (block **1412).** Method **1400** includes rescanning the nose conveyor surface after an interval time (block **1414).** Method **1400** includes determining whether at least an additional portion of the second parallel conveyor is empty adjacent to the first article on the second parallel conveyor by detecting that the article on the second conveyor is now in the proximal zone (decision block **1416).**

In response to determining that the article on the second conveyor has not yet moved from the center zone to the proximal zone in decision block **1416,** method **1400** returns to block **1414** to wait and to rescan. In response to determining that the article on the second conveyor has moved at least from the center zone to the proximal zone in decision block **1416,** method **1400** includes causing the first parallel conveyor to operate at the first speed (block **1418).** Then method **1400** returns to block **1402** to verify that the first and second conveyors are empty before conveying articles on the fourth and fifth conveyors.

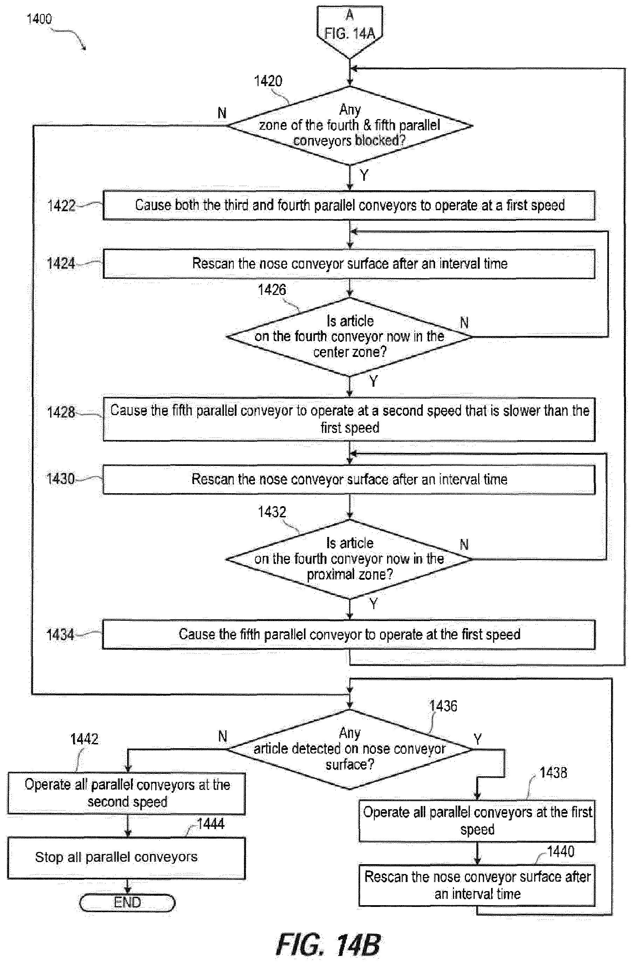

In response to determining that one side of the nose conveyor surface is not blocked in any zone of the first and second parallel conveyors in decision block **1404,** then method **1400** includes determining whether the other side of the nose conveyor surface of the fourth and fifth parallel conveyors is blocked in any respective zone (decision block **1420),** as shown in **FIG. 14B****.** In response to determining that the other side of the nose conveyor surface of the fourth and fifth parallel conveyors is blocked in any respective zone in decision block **1420,** method **1400** includes running both the third and fourth parallel conveyors at a first speed (block **1422).** First, second, and fifth parallel conveyors remain stationary.

Method **1400** includes rescanning the nose conveyor surface after an interval time (block **1424).** Method **1400** includes determining whether at least a portion of the fourth parallel conveyor is empty adjacent to the first article on the fifth parallel conveyor by detecting that the article on the second conveyor is now in the center zone (decision block **1426).** In response to determining that the article on the fourth conveyor has not yet moved from the distal zone to the center zone in decision block **1426,** method **1400** returns to block **1424** to wait and to rescan. In response to determining that the article on the fourth conveyor has moved from the distal zone to the center zone in decision block **1426,** method **1400** includes causing the fifth parallel conveyor to operate at a second speed that is slower than the first speed (block **1428).** Method **1400** includes rescanning the nose conveyor surface after an interval time (block **1430).** Method **1400** includes determining whether at least an additional portion of the fourth parallel conveyor is empty adjacent to the first article on the fifth parallel conveyor by detecting that the article on the fourth conveyor is now in the proximal zone (decision block **1432).** In response to determining that the article on the fourth conveyor has not yet moved at least from the center zone to the proximal zone in decision block **1432,** method **1400** returns to block **1430** to wait and to rescan. In response to determining that the article on the fourth conveyor has moved at least from the center zone to the proximal zone in decision block **1432,** method **1400** includes causing the fifth parallel conveyor to operate at the first speed (block **1434).** Then method **1400** returns to block **1424** to verify that the fourth and fifth conveyors are empty.

In response to determining that the other side of the nose conveyor surface of the fourth and fifth parallel conveyors is not blocked in any respective zone in decision block **1420,** method **1400** includes determining whether any articles are detected on the nose conveyor surface (decision block **1436).** With both sides unblocked, articles may still remain at the center of the nose conveyor surface, specifically the third parallel conveyor. In response to determining that any articles are detected on the nose conveyor surface in decision block **1436,** then all parallel conveyors are operated at the first speed (block **1438).** Method **1400** includes rescanning the nose conveyor surface after an interval time (block **1440).** Then method **1400** returns to decision block **1436** to see if the nose conveyor surface is cleared. In response to determining that no articles are detected on the nose conveyor surface in decision block **1436,** then all parallel conveyors are operated at the second speed for a period of time (block **1442).** Method **1400** includes stopping all parallel conveyors (block **1444).** Then method **1400** ends.

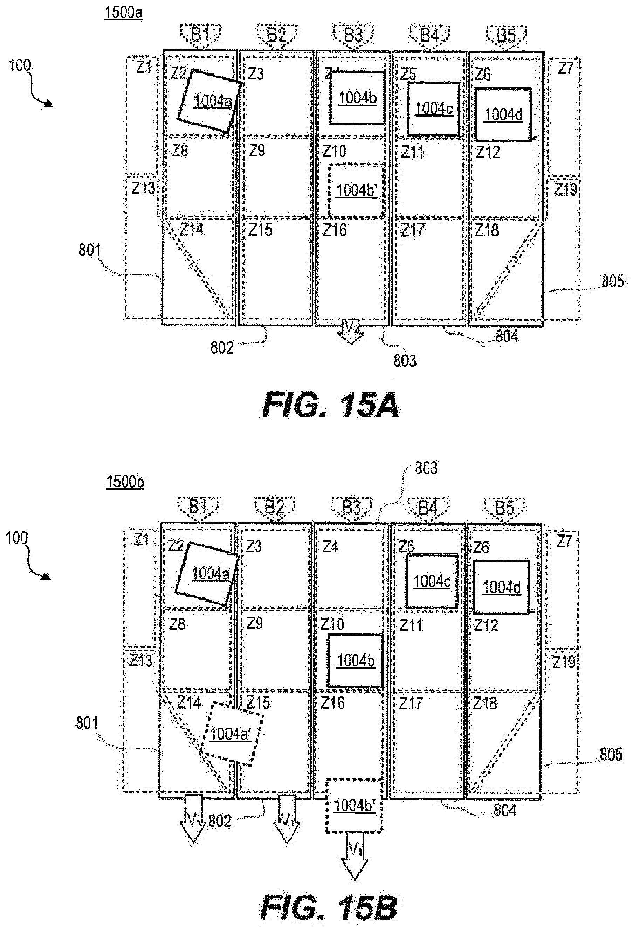

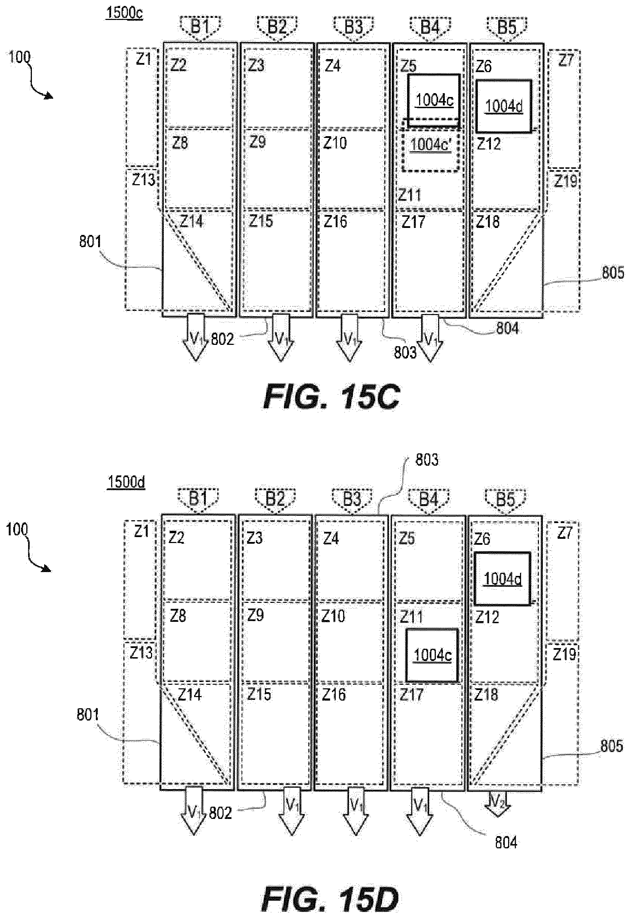

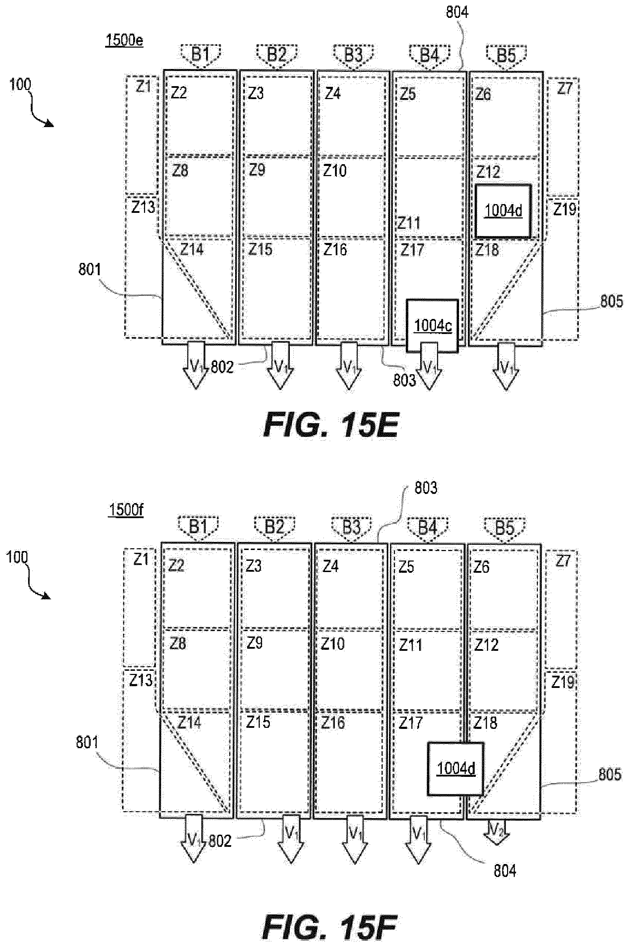

**FIG. 15A** illustrates an illustrative scenario **1500a** of operation of the nose conveyor surface **214** with cartons **1004a** - **1004d** initially in distal zones **Z2** and **Z4** - **Z6** respectively of the first parallel conveyor **801** ("B1"), third parallel conveyor **803** ("B3"), fourth parallel conveyor **804** ("B4"), and fifth parallel conveyor **805** ("B5"). During homing, B3 operates at a slow (second) speed "V₂" moving carton **1004b** to carton **1004b'** in center zone **Z10.** **FIG. 15B** illustrates a scenario **1500b** after a period of time from scenario **1500a (****FIG. 15A****).** The homed nose conveyor surface **214** is detected to have only one carton on the left side of either B1 and B2 and thus operates B1 - B3 at the full (first) speed, conveying carton **1004a** to proximal zone **Z15** of B2 and conveying carton **1004b** off of nose conveyor surface **214.** **FIG. 15C** illustrates a scenario **1500c** after a period of time from scenario **1500b (****FIG. 15B****).** The nose conveyor surface **214** is detected as having a blocked right side of both B4 and B5, preventing full speed conveying. In addition, the fourth and fifth parallel conveyors **804, 805** have been delayed in dispatching cartons **1004c** and **1004d** until the left side and center are cleared. **FIG. 15D** illustrates an illustrative scenario **1500d** after a period of time from scenario **1500c (****FIG. 15C****).** Carton **1004c** has moved on B4 from distal zone **Z5** to center zone **Z11,** enabling B5 to be operated at the second, slower speed "V₂". **FIG. 15E** illustrates an illustrative scenario **1500e** after a period of time from scenario **1500d (****FIG. 15D****).** Carton **1004c** has moved on B4 from center zone **Z11** to proximal zone **Z17,** enabling B5 to be operated at the first, higher speed "Vi". **FIG. 15F** illustrates an illustrative scenario **1500f** after a period of time from scenario **1500e (****FIG. 15E****).** Carton **1004d** has moved on B5 from center zone **Z12** to divert onto proximal zone **Z17** of B4 in preparation for exiting the nose conveyor surface **214.**

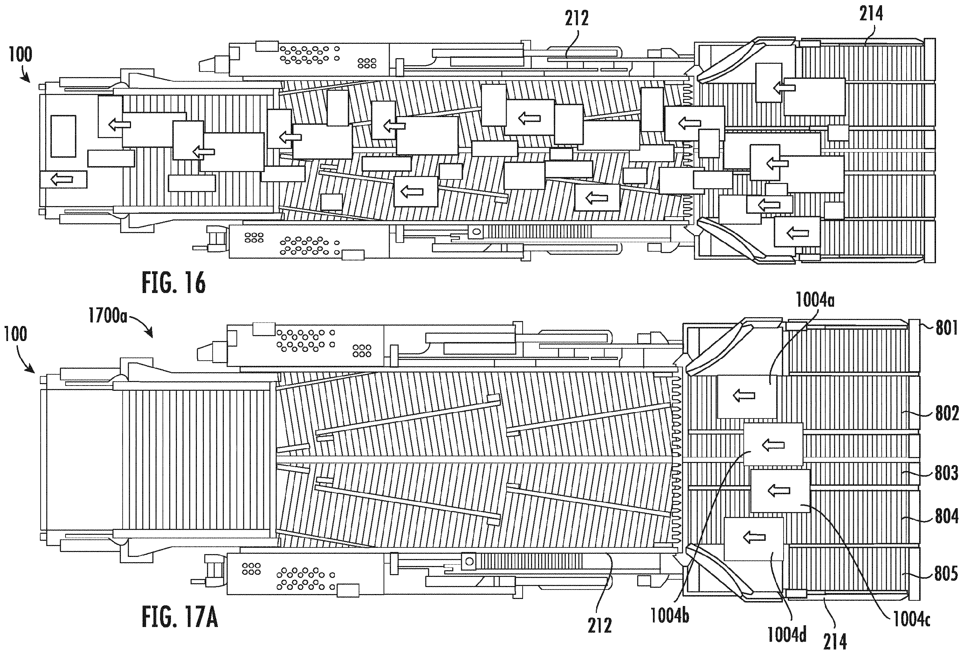

**FIG. 16** illustrates a top view of conveying articles from the nose conveyor surface **214** and the rearward conveyor **212** of the robotic material handling system **100** during normal, unjammed operation, according to one or more embodiments of the present disclosure.

**FIG. 17A** illustrates an illustrative scenario **1700a** of operation of the robotic material handling system **100** having the nose conveyor surface **214** with jammed articles, according to one or more embodiments of the present disclosure. As shown in **FIG. 17A****,** the nose conveyor surface **214** may be conveying cartons **1004a-1004d** in a rearward direction towards the rearward conveyor **212.** Carton **1004a** may have diverted from the first parallel conveyor **801** ("B1") to the to the proximal zone (not shown) of the second parallel conveyor **802** ("B2"), carton **1004b** may have travelled to the proximal zone (not shown) of the third parallel conveyor **803** ("B3"), carton **1004c** may have travelled to the proximal zone (not shown) of the fourth parallel conveyor **804** ("B4"), and carton **1004d** may have diverted from the fifth parallel conveyor **805** ("B5") to the proximal zone (not shown) of the fourth parallel conveyor **804** ("B4"). As shown in **FIG. 17A****,** as the rearward conveyor **212** is narrower than the nose conveyor surface **214,** cartons **1004a-1004d** are jammed at the proximal end of the nose conveyor surface **214** and may not able to exit the nose conveyor surface **214.**

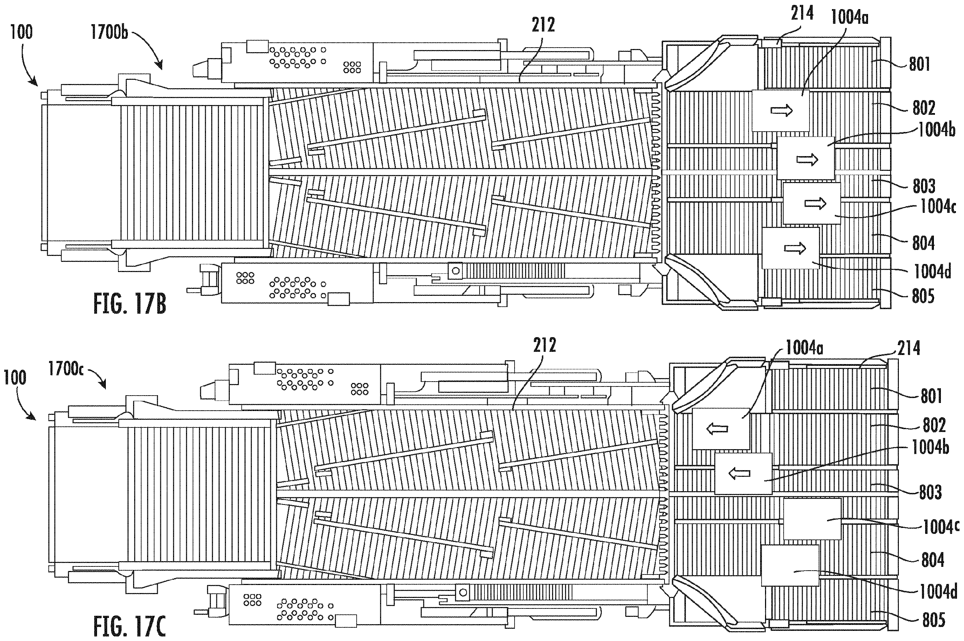

**FIG. 17B** illustrates an illustrative scenario **1700b** of operation of the robotic material handling system **100** having the nose conveyor surface **214** after a period of time from scenario **1700a,** according to one or more embodiments of the present disclosure. On detecting the jam at the nose conveyor surface **214,** as shown in **FIG. 17A****,** the nose conveyor surface **214** may change the direction of conveyance of the cartons **1004a-1004d** from the rearward direction towards the rearward conveyor **212** to a forward direction away from the rearward conveyor **212,** as shown in **FIG. 17B****.** On operating the parallel conveyors **801-805** in a forward direction, the carton **1004a** may move from the proximal zone to the center zone of the second parallel conveyor **802** ("B2"), carton **1004b** may move from the proximal zone to center or distal zone of the third parallel conveyor **803** ("B3"), carton **1004c** may move from the proximal zone to center or distal zone of the fourth parallel conveyor **804** ("B4"), and carton **1004d** may move from the proximal zone to center zone of the fourth parallel conveyor **804** ("B4"), as shown.

**FIG. 17C** illustrates an illustrative scenario **1700c** of operation of the robotic material handling system **100** having the nose conveyor surface **214** after a period of time from scenario **1700b,** according to one or more embodiments of the present disclosure. As shown in **FIG. 17C****,** a portion of the previously jammed cartons may be conveyed rearward. Specifically, carton **1004a** may be conveyed rearward from the center zone to the proximal zone of the second parallel conveyor **802** ("B2") based on the current location of carton 1004a. Similarly, carton **1004b** may be conveyed rearward from the center or distal zone to the proximal zone of the third parallel conveyor **803** ("B3") based on the current location of carton 1004b. In an embodiment, the second parallel conveyor **802** ("B2") and the third parallel conveyor **803** ("B3") may convey the cartons **1004a-1004b** at a first, higher speed, "Vi", as described above. In scenario **1700c,** cartons **1004c-1004d** may not be conveyed and may be kept stationary on the fourth parallel conveyor **804** ("B4") until left side of B4 is determined to be cleared, that is, the second parallel conveyor 802 ("B2") and/or the third parallel conveyor 803 ("B3"). In another embodiment, the fourth parallel conveyor 804 may convey the cartons 1004c-1004d from the center or distal zones to the proximal zone of B4 at a second, slower speed "V₂."

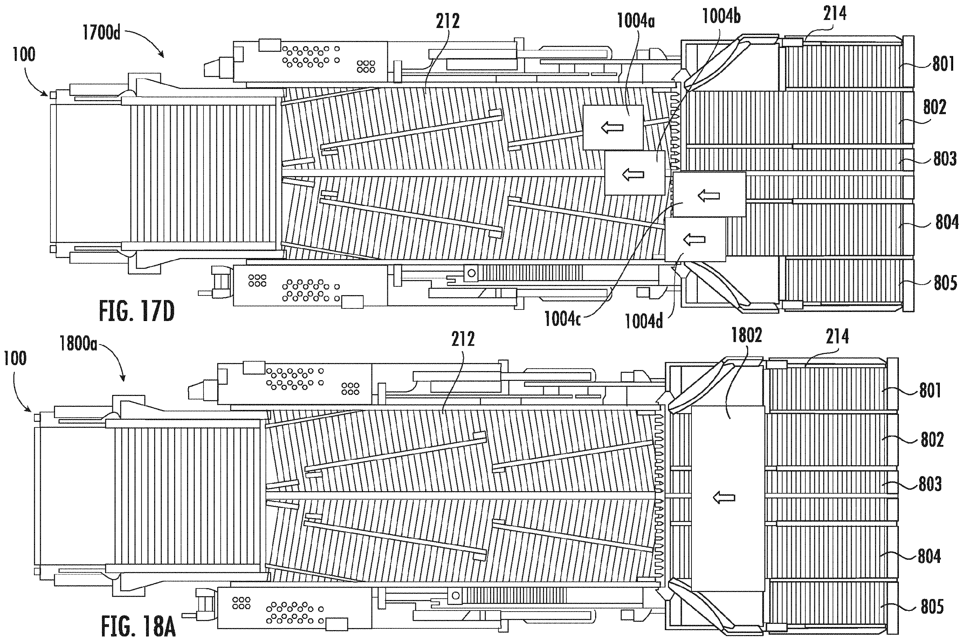

**FIG. 17D** illustrates an illustrative scenario **1700d** of operation of the robotic material handling system **100** having the nose conveyor surface **214** after a period of time from scenario **1700c,** according to one or more embodiments of the present disclosure. As shown in **FIG. 17D****,** remaining portion of the previously jammed cartons may be conveyed rearward towards the rearward conveyor **212.** Specifically, carton **1004a** may have moved from the second parallel conveyor **802** ("B2") to the rearward conveyor **212.** Similarly, carton **1004b** may have moved from the third parallel conveyor **803** ("B3") to the rearward conveyor **212.** Once the left side of B4 is determined to be cleared, the fourth parallel conveyor **804** ("B4") may convey the cartons **1004c-1004d** at a first, higher speed, "Vi" from the proximal zone of the B4 to the rearward conveyor **212.** Thus, the jam on the nose conveyor surface **214** may be cleared by conveying the jammed articles in a forward direction and then conveying a portion of the jammed articles in the rearward direction followed by the remaining portion of the jammed articles.

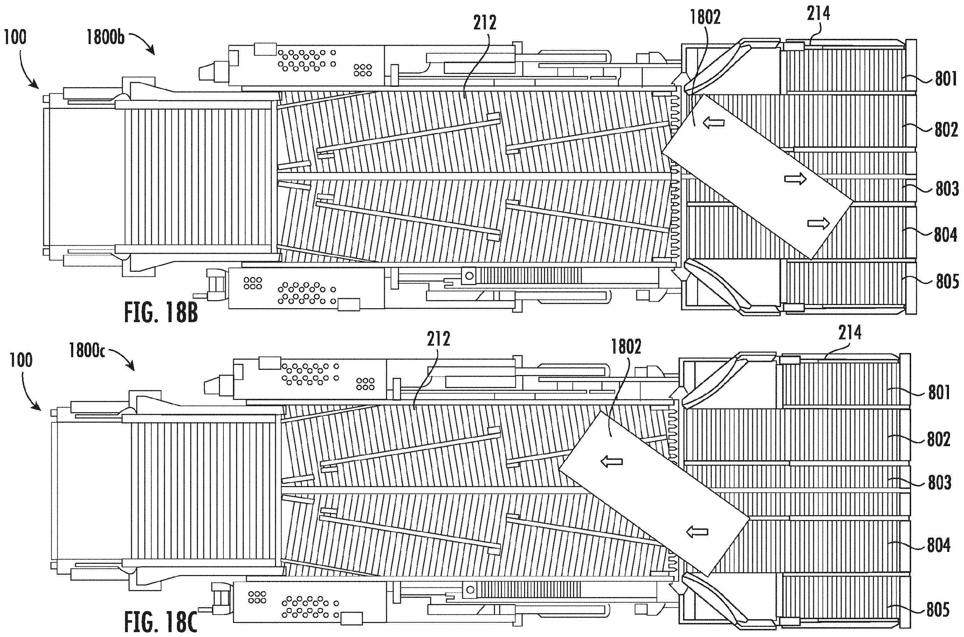

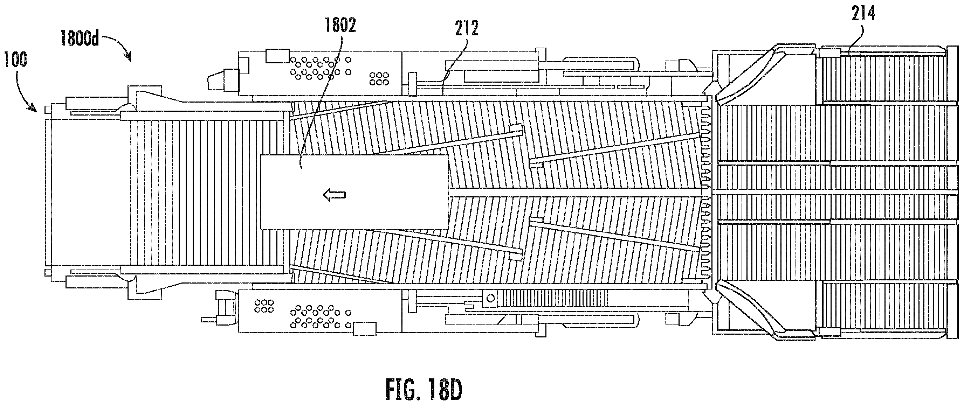

**FIG. 18A** illustrates an illustrative scenario **1800a** of operation of the nose conveyor surface **214** with a long article **1802** that is transversely aligned causing a jam, according to one or more embodiments of the present disclosure. As shown in **FIG. 18A****,** the long article **1802** may have a length L1 that may be greater than the proximal end of the nose conveyor surface **214.** Thus, the long article **1802** may be jammed at the proximal zone of the second parallel conveyor **802** ("B2"), the third parallel conveyor **803** ("B3"), and the fourth parallel conveyor **804** ("B4") of the nose conveyor surface **214,** as shown. **FIG. 18B** illustrates a scenario **1800b** of operation of the robotic material handling system **100** having the nose conveyor surface **214** after a period of time from scenario **1800a,** according to one or more embodiments of the present disclosure. On detecting the jam on the nose conveyor surface **214** based on data received from the nose IR-RGB-D unit **710** as shown in **FIG. 7****,** due to the transversely aligned long article **1802,** one or more parallel conveyors having a portion of the long article **1802** may be moved in a forward direction to rotate the long article **1802** at least partially into a longitudinal alignment, according to one or more embodiments of the present disclosure. If the operation fails, the one or more parallel conveyors having a portion of the long article **1802** may be moved in the opposite direction to rotate the long article **1802.** In an embodiment, the one or more parallel conveyors may be selected based on the area of contact with the article. For example, the parallel conveyors that have most the portion of the article in contact, may be moved in a forward and/or backward direction. In an embodiment, the third parallel conveyor **803** ("B3") and the fourth parallel conveyor **804** ("B4") having contact with at least a portion of the long article **1802,** may convey the long article **1802** in a forward direction away from the rearward conveyor **212,** as shown in **FIG. 18B****.** Further, the second parallel conveyor **802** ("B2") may continue to convey the long article **1802** in the rearward direction towards the rearward conveyor **212.** Thus, the long article **1802** may be rotated from the transverse alignment to a partially longitudinal alignment. **FIG. 18C** illustrates a scenario **1800c** of operation of the robotic material handling system **100** having the nose conveyor surface **214** after a period of time from scenario **1800b,** according to one or more embodiments of the present disclosure. In an embodiment, on detecting that the at least partially aligned long article **1802** may be conveyed from the nose conveyor surface **214** to the rearward conveyor **212,** the third parallel conveyor **803** ("B3") and the fourth parallel conveyor **804** ("B4") may change the direction of the conveyance of the long article **1802** from a forward direction to the rearward direction. **FIG. 18D** illustrates a scenario **1800d** of operation of the robotic material handling system **100** having the nose conveyor surface **214** after a period of time from scenario **1800c,** according to one or more embodiments of the present disclosure. As shown in **FIG. 18D****,** the long article **1802** may be rearwardly conveyed on the rearward conveyor **212.** Thus, the long article **1802** may be rotated, re-aligned, unjammed, and conveyed from the nose conveyor surface **214** to the rearward conveyor **212.**

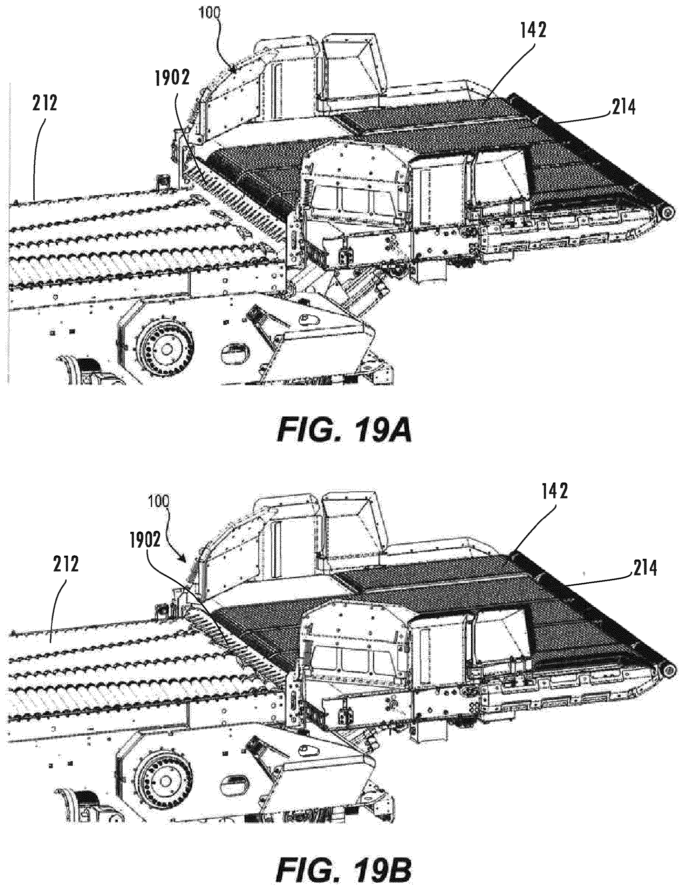

**FIG. 19A** illustrates the robotic material handling system **100** having the front portion **142** of the conveyor system **110** that is capable of longitudinally separating articles (not shown) in an expeditious fashion without jamming or overwhelming the rearward conveyor **212.** The front portion **142** includes the nose conveyor surface **214** for conveying articles to the rearward conveyor **212.** The rearward conveyor **212** may be narrower than the nose conveyor surface **214,** as shown in **FIG. 19A****.** The front portion **142** of the conveyor system **110** may further include the left diverter **806** and the right diverter **808,** as shown previously in **FIG. 9****.** The left diverter **806** and the right diverter **808** may extending vertically on each side of the nose conveyor surface **214.** The left diverter **806** may divert articles from a center zone of the first parallel conveyor **801** to a proximal zone of the second parallel conveyor **802.** The right diverter **808** may divert articles from a center zone of the fifth parallel conveyor **805** to a proximal zone of the fourth parallel conveyor **804.**

The front portion **142** of the conveyor system **110** may further have a transition plate **1902,** as shown in **FIG. 19A****.** In an embodiment, the transition plate **1902** may be hingedly attached to the proximal end of the nose conveyor surface **214** at one end. The other end of the transition plate **1902** may reside over the rearward conveyor **212** when the nose conveyor surface **214** is homed. In another embodiment, one end of the transition plate **1902** may be fixedly attached at an angle to the proximal end of the nose conveyor surface **214,** and the other end of the transition plate **1902** may reside over the rearward conveyor **212** when the nose conveyor surface **214** is homed. In an embodiment, the transition plate **1902** may not reside over and/or contact the rearward conveyor **212.** The transition plate **1902** may provide a transition platform for articles being conveyed from the nose conveyor surface **214** to the rearward conveyor **212,** and/or vice versa. The transition plate **1902** may prevent smaller articles from falling through a gap between the nose conveyor surface **214** to the rearward conveyor **212,** and may also prevent any damage to heavy or fragile articles by allowing them to slide over the transition plate **1902** towards the rearward conveyor **212,** instead of an abrupt transition from the nose conveyor surface **214** to the rearward conveyor **212.** **FIG. 19A****,** illustrates the nose conveyor surface **214** in a raised position, such that the transition plate **1902** creates an inclined transition platform between the nose conveyor surface **214** and the rearward conveyor **212.** **FIG. 19B** illustrates the nose conveyor surface **214** in a homed position aligned with the rearward conveyor **212,** according to one or more embodiments of the present disclosure. As shown in **FIG. 19B****,** the transition plate **1902** may act as a transition platform between the nose conveyor surface **214** and the rearward conveyor **212.** In an embodiment, the angle of incline (if any) of the transition plate **1902** when the nose conveyor surface **214** is in the homed position is lesser than an angle of incline when the nose conveyor surface **214** may be in a raised position, as in **FIG. 19A****.**

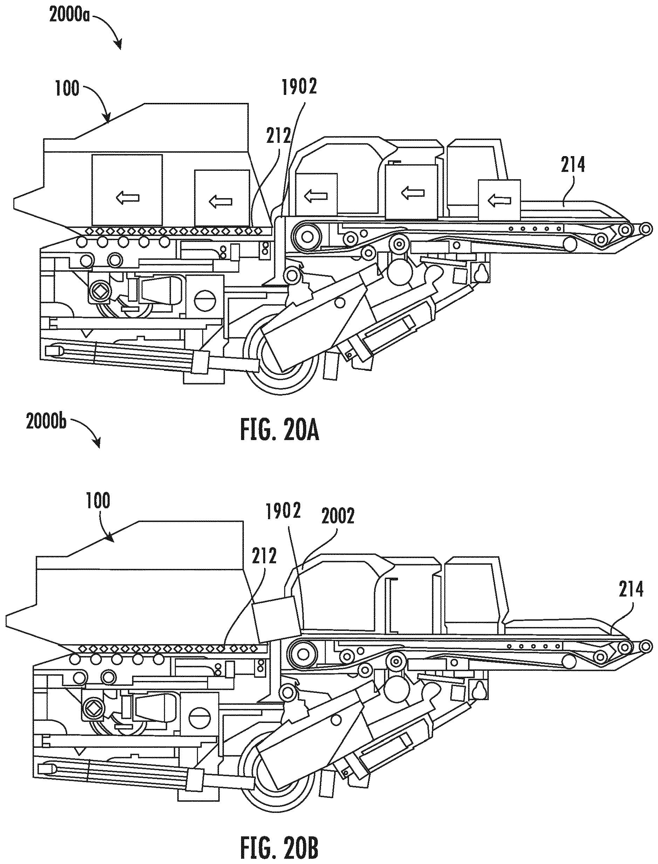

**FIG. 20A** illustrates an illustrative scenario **2000a** of operation of the nose conveyor surface **214** in a raised position conveying a series of articles, according to one or more embodiments of the present disclosure. As shown in **FIG. 20A****,** the series of articles may be conveyed in a rearward direction by the nose conveyor surface **214** to the rearward conveyor **212.** In an embodiment, the front portion **142** of the conveyor system **110** may further have a transition plate **1902** attached to the nose conveyor surface **214,** such that the series of articles may go over the transition plate **1902** when conveyed by the nose conveyor surface **214** in a rearward direction.

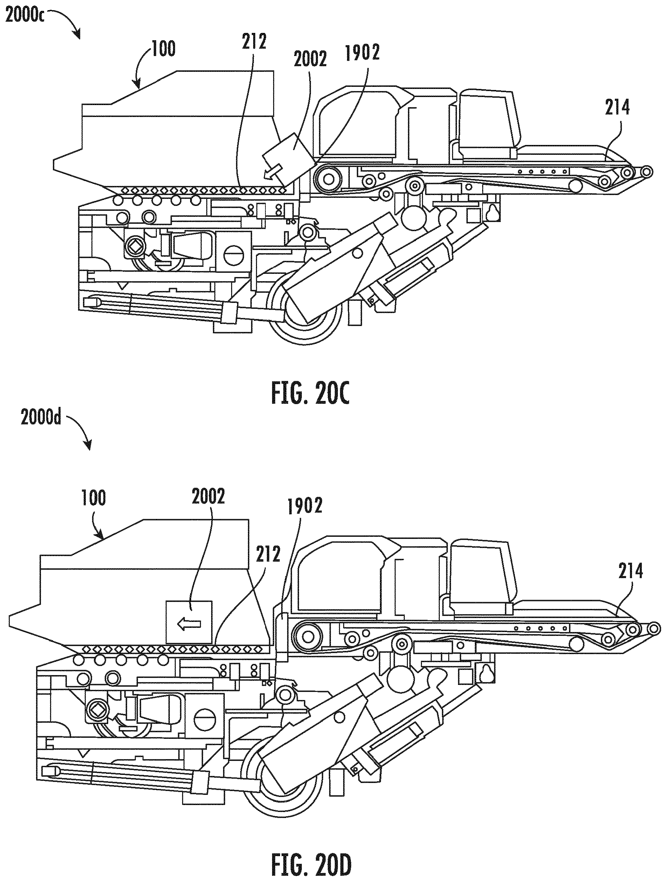

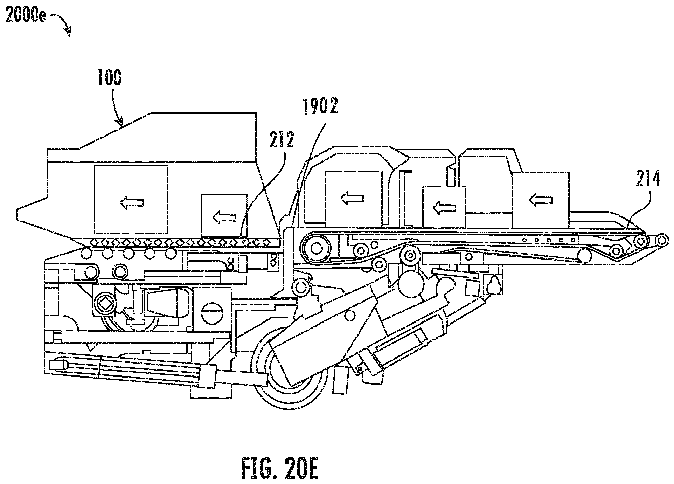

**FIG. 20B** illustrates a scenario **2000b** of operation of the robotic material handling system **100** having the nose conveyor surface **214** in a raised position with an article **2002** stalled on the transition plate **1902,** according to one or more embodiments of the present disclosure. The robotic material handling system **100** may detect a jam on the transition plate **1902** due to the stalled article **2002** based on data received from the nose IR-RGB-D unit **710** as shown in **FIG. 7****.** In an embodiment, in response to detecting the jam, the robotic material handling system **100** may stop further product flow on the nose conveyor surface **214.** **FIG. 20C** illustrates a scenario **2000c** of operation of the robotic material handling system **100** having the nose conveyor surface **214** after a period of time from scenario **2000b,** according to one or more embodiments of the present disclosure. As shown in **FIG. 20C****,** the nose conveyor surface **214** may be in an increased raised position with the article **2002** being dislodged from the transition plate **1902,** according to one or more embodiments of the present disclosure. In an embodiment, the robotic material handling system **100** on detecting the jam on the transition plate **1902** due to the stalled article **2002,** may vertically reposition the nose conveyor surface **214.** In an embodiment, the nose conveyor surface **214** may be raised further higher than the position of the nose conveyor surface **214** in the jammed condition (scenario **2000b).** When the nose conveyor surface **214** is raised vertically upwards, the transition plate **1902** may be altered and the stalled article **2002** may be freed, as shown in **FIG. 20C****.** For example, jams on the nose conveyor surface **214** may be due to articles stalling on the transition plate **1902.** By lifting the nose conveyor surface **214** vertically, the hinged transition plate **1902** can angle more vertically, allowing for gravity to aid in transitioning the article **2002** off the transition plate **1902,** and thus clearing the jam. **FIG. 20D** illustrates a scenario **2000d** of operation of the robotic material handling system **100** having the nose conveyor surface **214** after a period of time from scenario **2000c,** according to one or more embodiments of the present disclosure. As shown in **FIG. 20D****,** the nose conveyor surface **214** in the increased raised position as in scenario **2000c** may dislodge the article **2002** stalled at the transition plate **1902** such that the article **2002** may be conveyed on the rearward conveyor **212.** **FIG. 20E****,** illustrates a scenario **2000e** of operation of the robotic material handling system **100** having the nose conveyor surface **214** after a period of time from scenario **2000d,** according to one or more embodiments of the present disclosure. As shown in **FIG. 20E****,** once the article **2002** is dislodged from the transition plate **1902,** the nose conveyor surface **214** may be brought back to the homed position and the robotic material handling system **100** may resume product flow on the nose conveyor surface **214.** Once homed, the nose conveyor surface **214** may start discharging a series of articles in resumed normal operation.

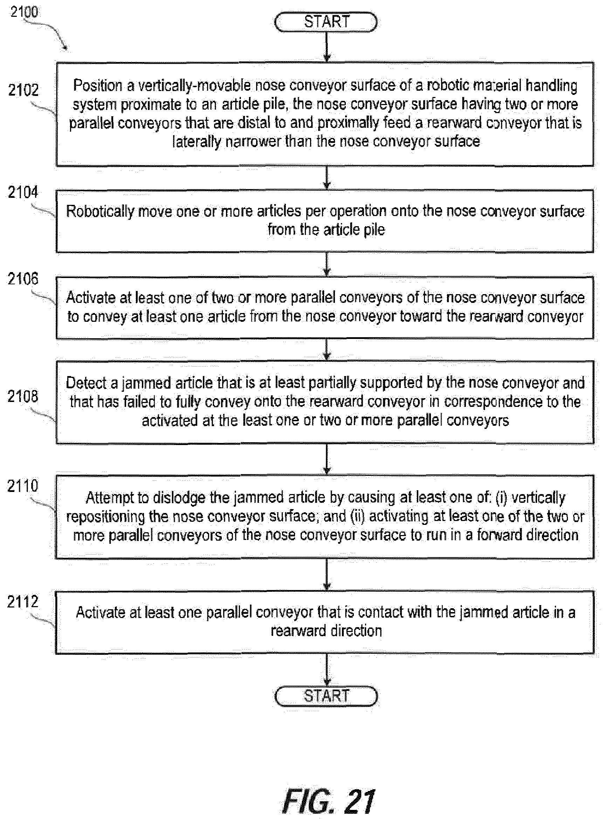

**FIG. 21** illustrates a method **2100** of conveying articles on a robotic material handling system. In one or more embodiments, method begins positioning a vertically-movable nose conveyor surface **214** of a robotic material handling system proximate to an article pile. The nose conveyor surface **214** has two or more parallel conveyors that are distal to and proximally feed a rearward conveyor that is laterally narrower than the nose conveyor surface **214** (block **2102).** Method **2100** includes robotically moving one or more articles per operation onto the nose conveyor surface **214** from the article pile (block **2104).** Method **2100** includes activating at least one of two or more parallel conveyors of the nose conveyor surface **214** to convey at least one article from the nose conveyor toward the rearward conveyor (block **2106).** Method **2100** includes detecting a jammed article that is at least partially supported by the nose conveyor and that has failed to fully convey onto the rearward conveyor in correspondence to the activated at least one or two or more parallel conveyors (block **2108).** Method **2100** includes attempting to dislodge the jammed article by causing at least one of: (i) vertically repositioning the nose conveyor surface **214;** and (ii) activating at least one of the two or more parallel conveyors of the nose conveyor surface **214** to run in a forward direction (block **2110).** In an embodiment, the method **2100** is an iterative process using a combination of both (i) and (ii). That is, the jammed article may be attempted to be dislodged by vertically repositioning the nose conveyor surface **214,** and if the jam persists, the method **2100** may include activating at least one of the two or more parallel conveyors of the nose conveyor surface **214** to run in a forward direction, as described above. Method **2100** includes activating at least one parallel conveyor that is contact with the jammed article in a rearward direction. Then method **2100** ends.

In one or more embodiments, the method **2100** includes detecting the jammed article by scanning the nose conveyor surface **214** and identifying one or more articles that are present on the nose conveyor surface **214** within respective zones of the two or more parallel conveyors by comparing the scanned nose conveyor surface **214** to a baseline scan of an empty nose conveyor surface **214.** The method **2100** may further include tracking the at least one article with in the identified zone of the activated at least one of two or more parallel conveyors of the nose conveyor surface **214** and determining that the at least one article has become the jammed article by failing to convey onto the rearward conveyor **212.** In an embodiment, tracking the at least one article within the identified zone may include determining that the at least one article has not indexed to the next zone in a predefined time and/or detecting that the at least one article does not move when the belt under the article associated with the identified zone is commanded to move.

In one or more embodiments; the method **2100** may include attempting to dislodge the jammed article comprises vertically repositioning the nose conveyor surface **214.** The method includes activating the at least one parallel conveyor that is contact with the jammed article in a rearward direction comprises activating at least one parallel conveyor of the nose conveyor surface **214** and at least a portion of the rearward conveyor based on a location of the jammed article determined based on data received from the nose IR-RGB-D unit **710** as shown in FIG. 7. In one particular embodiment, method **2100** includes repositioning the nose conveyor surface **214** by raising the nose conveyor surface **214.** In one particular embodiment, method **2100** includes repositioning the nose conveyor surface **214** by lowering the nose conveyor surface **214** to a homed position in alignment with the rearward conveyor **212.**

In one or more embodiments, method **2100** includes attempting to dislodge the jammed article by activating at least one of the two or more parallel conveyors of the nose conveyor surface **214** to run in a forward direction away from the rearward conveyor. The method includes activating the at least one parallel conveyor that is contact with the jammed article in a rearward direction by activating at least one parallel conveyor of the nose conveyor surface **214.** In an exemplary embodiment, method **2100** includes activating at least one of the two or more parallel conveyors of the nose conveyor surface **214** to run in a forward direction away from the rearward conveyor. Method **2100** includes activating at least another one of the two or more parallel simultaneously with the at least one of the two or more parallel conveyors in a rearward direction to rotate the jammed article into longitudinal alignment with the rearward conveyor.

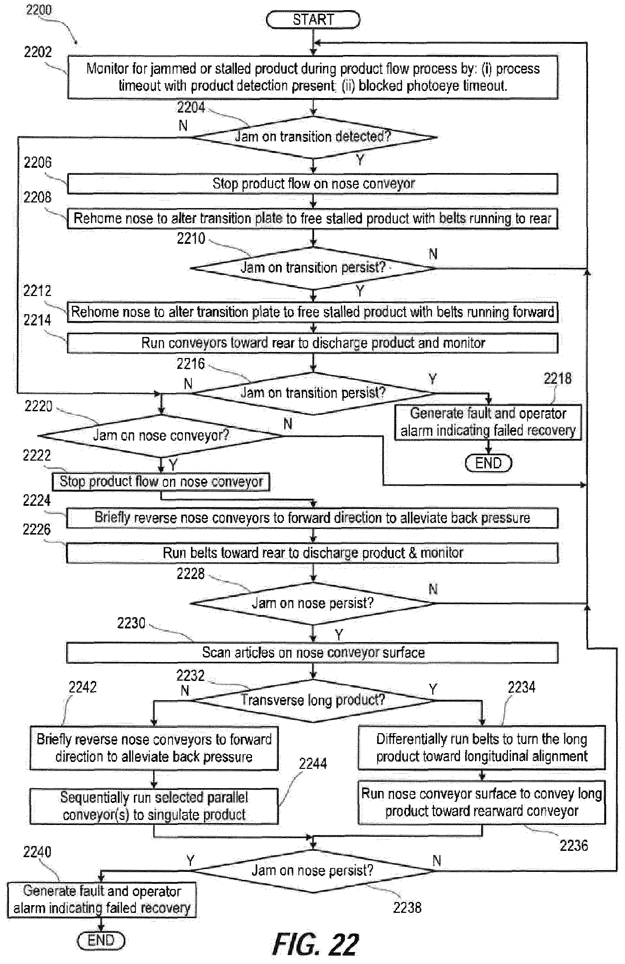

**FIG. 22** illustrates a method of an exemplary method **2200** of clearing a jam of an article that is at least partially supported on a nose conveyor portion of a robotic material handling system. According to one or more embodiments, method **2200** begins monitoring for jammed or stalled product during product flow process by: (i) process timeout with product detection present; (ii) blocked photoeye timeout (block **2202).** The term "process timeout" as used herein might refer to a factor of expected time to clear a product based on a predefined speed of the conveyor belt. The term "photoeye timeout" as used herein might refer to a factor of expected time to clear a product based on conveyor belt speed and largest product size. A determination is made as to whether a jam is detected on a transition between the nose conveyor surface 214 and the rearward conveyor on a transition plate (decision block **2204).** In response to determining that a jam on the transition plate exists, controller stops product flow on nose conveyor (block **2206).** Method **2200** include rehoming nose to alter transition plate to free stalled product with belts running forward toward article pile (block **2208).** A determination is made as to whether the jam at the transition persists (decision block **2210).** In response to determining that the jam is cleared, method **2200** returns to block **2202** to continue monitoring for additional jams. In response to determining that the jam is not cleared, method **2200** includes include rehoming nose to alter transition plate to free stalled product with belts running to the rear (block **2212).** Method **2200** includes running conveyors toward rear to discharge product and monitoring results (block **2214).** A determination is made as to whether the jam at the transition persists (decision block **2216).** In response to determining that the jam persists, the controller generates a fault and an operator alarm indicating failed recovery (block **2218).** Then method **2200** ends.

In response to determining that the jam at the transition does not persist in decision block **2216** or after determining that a jam did not exist on at the transition back at decision block **2204,** method **2100** includes a further determination of whether a jam exists on the nose conveyor (decision block **2220).** In response to determining that a jam does not exist on the nose conveyor, method **2200** returns to block **2202** to continue monitoring for jams. In response to determining that a jam does exist on the nose conveyor, method **2200** includes stopping product flow on the nose conveyor (block **2222).** Controller briefly reverses nose conveyor to run forward in direction to alleviate back pressure (block **2224).** The term "back pressure" as used herein might refer to a pressure applied to the jammed product by additional product behind the jam in the direction of product flow. Back pressure is generally expected when a jam occurs while trying to have a large amount of product flow. Method **2200** includes running conveyors such as parallel belt conveyors, toward rear to discharge product and monitors the results (block **2226).**

Method **2200** includes determining whether a jam persists on the nose conveyor (decision block **2228).** If no jam is determined to exist on the nose conveyor, then method **2200** returns to block **2202** to continue monitoring for jams on the forward portion of the robotic material handling system. If no jam is determined to on the nose conveyor, then method **2200** includes scanning for articles on the nose conveyor surface 214 (block **2230).** A determination is made as to whether a long product has jammed in a transverse alignment across the nose conveyor (decision block **2232).** In response to determining that a long product is transversely aligned, method **2200** includes differentially running belts of the nose conveyor to turn the long product toward a longitudinal alignment (block **2234).** Differentially running belts may include running each belt at different speed, direction, and/or a combination thereof, as described above with reference to **FIG. 18B****.** Method **2200** includes running the nose conveyor surface **214** toward the rearward conveyor to convey the long product (block **2236).** A determination is made as to whether the jam persists on the nose conveyor (decision block **2238).** In response to determining that the jam does not persist on the nose conveyor, method **2200** returns to block **2202** to continue monitoring for jams on the forward portion of the robotic material handling system. In response to determining that the jam does persist on the nose conveyor, method **2200** includes generating a fault and operator alarm indicating that the recovery has failed (block **2240).** Then method **2200.**

In response to determining that no long products are transverse across the nose conveyor in decision block **2232,** then the controller briefly reverses the nose conveyor to a forward direction to alleviate back pressure (block **2242).** Method **2200** includes sequentially runs selected parallel belt conveyor(s) to singulate product off of the nose conveyor (block **2244).** The method **2200** proceeds to block **2238** to determine whether or not the jam is cleared.

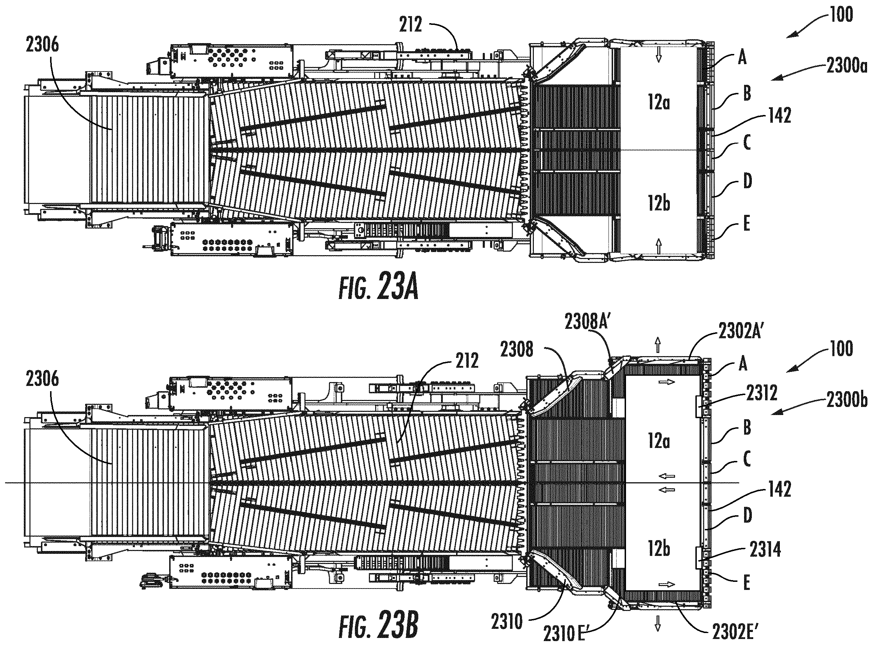

**FIGS. 23A-G** show operations of the robotic material handling system **100** conveying, jamming, and unjamming of one or more cartons **12** in the material handling environment including the robotic material handling system **100.**

As shown in **FIG. 23A****,** the robotic material handling system **100** includes the front portion **142** and/or the nose conveyor surface **214** of the front portion **142** for receiving one or more articles, such as, cartons **12a** and **12b,** as shown. The front portion **142** may include one or more independently controllable zones, such as, zones **A, B, C, D,** and **E,** similar to zones **Z1-Z19** as described above. The robotic material handling system **100** further includes a rearward conveyor **212** located downstream of the front portion **142** for receiving one or more articles, such as cartons **12a** and **12b** from the front portion **142.** In an embodiment, the rearward conveyor **212** may further convey the cartons **12a** and **12b** downstream to an end conveyor **2306,** similar to the laterally-shifting transition conveyor **216.**

**FIG. 23A** depicts an illustrative scenario **2300a** at an instant of time. As depicted, the cartons **12a** and **12b** may be jammed on the front portion **142,** that is, the cartons **12a** and **12b** may be unable to move forward towards the rearward conveyor **212.** The robotic material handling system **100** and/or the controller may detect that the cartons **12a** and **12b** are jammed by means of the control and visualization system **180,** for example.

**FIG. 23B** shown a scenario **2300b** after an interval of time from the scenario **2300a,** in response to detecting a jam on the front portion **142,** as described above. In accordance with an embodiment of the present disclosure, the front portion **142** has one or more expandable portions. For example, as shown in **FIG. 23B****,** the front portion **142** may include a first expandable portion **2302A'** and a second expandable portion **2302E'.** In an embodiment, the first expandable portion **2302A'** and the second expandable portion **2302E'** may include at least a portion of the zones **A** and **E** movable to expand away from zones **B** and **D,** respectively, thus creating spaces **2312** and **2314,** as shown in **FIG. 23B****.**

It should be noted that the expansion mechanism of the front portion **142** is not limited to the embodiment described above, and/or other means of expanding the front portion **142** may be used. For example, the front portion **142** may include additional zones adjacent to zones **A** and **E,** that may be positioned adjacent to zones **A** and **E** when required, and may be titled down and/or positioned under the zones **A** and **E,** when the front portion **142** is retracted. Thus, the front portion **142** expands to a first configuration, as shown in **FIG. 23B****,** and retracts to a second configuration, as shown in **FIG. 23A**.

Further, in an embodiment, the rearward conveyor **212** may be narrower than the front portion **142.** In this regard, the robotic material handling system **100** may include one or more angled guides **2308, 2310** for directing one or more articles, such as, cartons **12a** and **12b** from the front portion **142** to the rearward conveyor **212,** as shown in **FIG. 23B****.** In an embodiment, the angled guides **2308** and **2310** may be movable and/or expandable to enable the front portion **142** to be expanded in the first configuration. Further, the angled guides **2308** and **2310** may be movable and/or retractable to enable the front portion **142** to be retracted in the second configuration. For example, the angled guide **2308** may include a movable and/or expandable portion **2308A'** that allows the front portion **142** to be expanded in the first configuration. Similarly, the angled guide **2310** may include a movable and/or expandable portion **2310E'** that allows the front portion **142** to be expanded in the first configuration.

As shown in **FIG. 23B****,** the robotic material handling system **100** and/or the controller, on detecting the jammed cartons **12a** and **12b,** expands the front portion **142** to the first configuration, as described above. Further, in an embodiment, the robotic material handling system **100** and/or the controller may attempt clearing the jam by separating the jammed articles, such as cartons **12a** and **12b,** by activating one or more of the plurality of zones under the jammed articles.

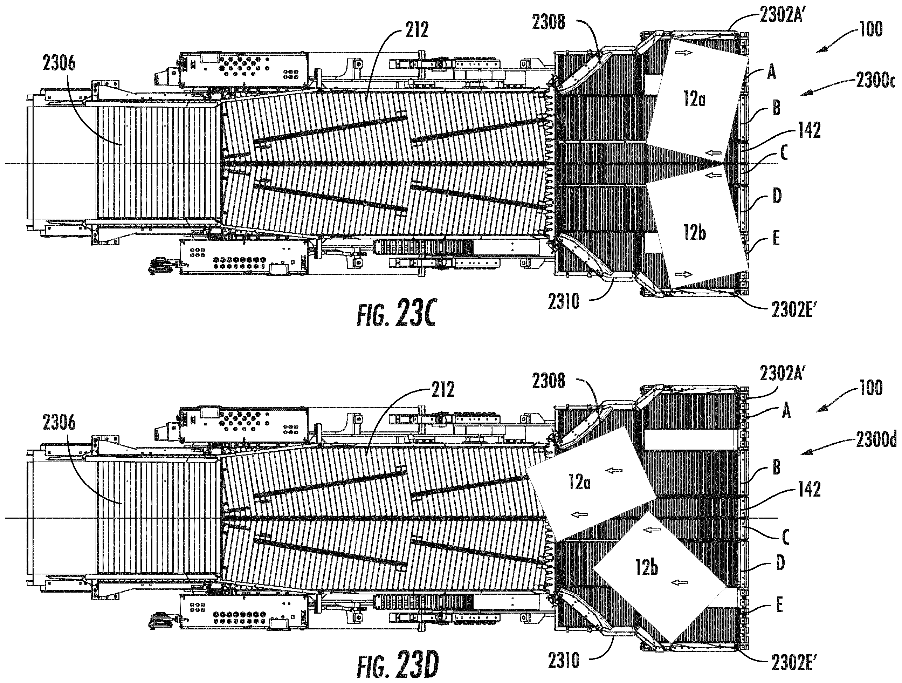

For example, **FIG. 23C** depicts a scenario **2300c** after an interval of time from the scenario **2300b.** As shown in **FIG. 23C****,** after expanding the front portion **142** on detecting jammed articles, such as cartons **12a** and **12b,** on the front portion **142,** the robotic material handling system **100** and/or the controller may activate one or more of the plurality of zones **A, B, C, D, E** under the cartons **12a** and **12b** selectively at variable speed and/or direction to separate the cartons **12a** and **12b.** For example, as shown in **FIG. 23C****,** the robotic material handling system **100** and/or the controller activates zone **C** and/or zone **B** contacting carton **12a** in a forward direction and activates zone **A** contacting carton **12a** in a reverse direction. Similarly, the robotic material handling system **100** and/or the controller activates zone **C** and/or zone **D** contacting carton **12b** in a forward direction and activates zone **E** contacting carton **12b** in a reverse direction. Thus, cartons **12a** and **12b** may rotate and separate from each other. The front portion **142** expanded in the first configuration provides space for the cartons **12a** and **12b** to separate from each other, as shown in scenario **2300c.**

**FIG. 23D** depicts a scenario **2300d** after an interval of time from the scenario **2300c.** In an embodiment, once the cartons **12a** and **12b** have separated from each other, the robotic material handling system **100** and/or the controller may control activation, speed, and/or direction of conveyance of zones under each of the cartons **12a** and **12b** separately, in order to dislodge the cartons **12a** and **12b** causing a jam on the front portion **142.** For example, as shown in **FIG. 23D****,** the robotic material handling system **100** and/or the controller may activate zones **A, B,** and/or **C** under carton **12a** in the forward direction towards the rearward conveyor **212** at a first speed. Further, the robotic material handling system **100** and/or the controller may activate zones **C, D,** and/or **E** under carton **12b** in the forward direction towards the rearward conveyor **212** at a time delay and/or at a second speed slower than the first speed. Thus, both cartons **12a** and **12b** may move from the front portion **142** to the rearward conveyor **212** one after the other, as shown in **FIG. 23D****.**

It should be noted that embodiments of the present disclosure are not limited to the scenarios **2300c** and **2300d,** as shown in **FIG. 23C** and **FIG. 23D****.** For example, once the front portion **142** is expanded in the first configuration, providing space for jammed articles to separate, the robotic material handling system **100** and/or the controller may control individual zones of the front portion **142,** as needed, to separate and dislodge the jammed articles.

For example, in an embodiment, the robotic material handling system **100** and/or the controller may actuate at least one of the plurality of zones under the one or more jammed articles in a first direction, while actuating at least another one of the plurality of zones under the one or more jammed articles in a direction opposite to the first direction. In yet another embodiment, the robotic material handling system **100** and/or the controller may actuate at least one of the plurality of zones under the one or more jammed articles at a first speed, while actuating at least another one of the plurality of zones under the one or more jammed articles at a second speed different than the first speed. In yet another embodiment, the robotic material handling system **100** and/or the controller may actuate at least one of the plurality of zones under the one or more jammed articles at a first speed in a first direction, while stopping at least another one of the plurality of zones under the one or more jammed articles. In yet another embodiment, the robotic material handling system **100** and/or the controller may accelerate or decelerate at least one of the plurality of zones under the one or more jammed articles in one or more of a first direction and/or a second direction. In yet another embodiment, the robotic material handling system **100** and/or the controller may dislodge a jammed article by actuating at least two of the plurality of zones in opposite directions to move a first end of the jammed article upstream and a second end of the jammed article downstream to rotate the jammed oversize article from a broad side position to a narrow end first position.

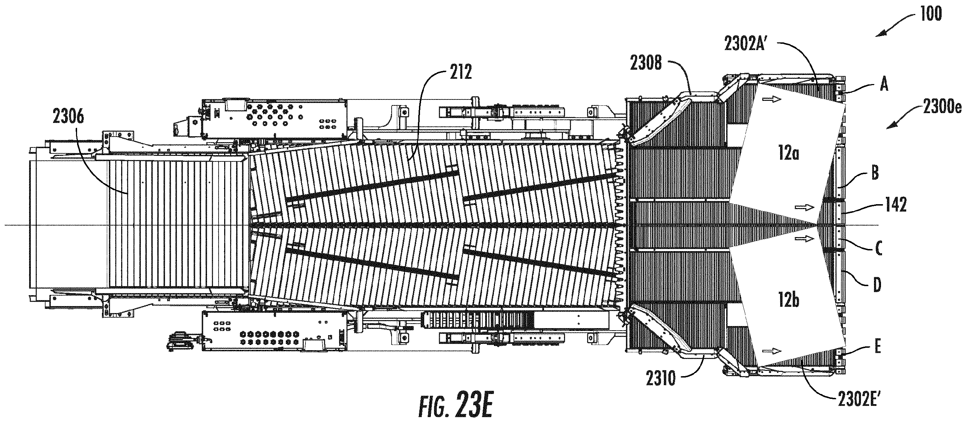

**FIG. 23E** depicts an alternative scenario **2300e** after an interval of time from the scenario **2300b** and/or scenario **2300c.** As shown in **FIG. 23E****,** after expanding the front portion **142** on detecting jammed articles, such as cartons **12a** and **12b** on the front portion **142,** the robotic material handling system **100** and/or the controller may activate one or more zones under the cartons **12a** and/or **12b** in a direction opposite to the direction of conveyance, that is, in a direction away from the rearward conveyor **212.** For example, the robotic material handling system **100** and/or the controller may activate zones **A, B,** and/or **C** contacting carton **12a** in a reverse direction. Additionally or alternatively, the robotic material handling system **100** and/or the controller may activate zones **C, D,** and/or **E** contacting carton **12b** in a reverse direction.

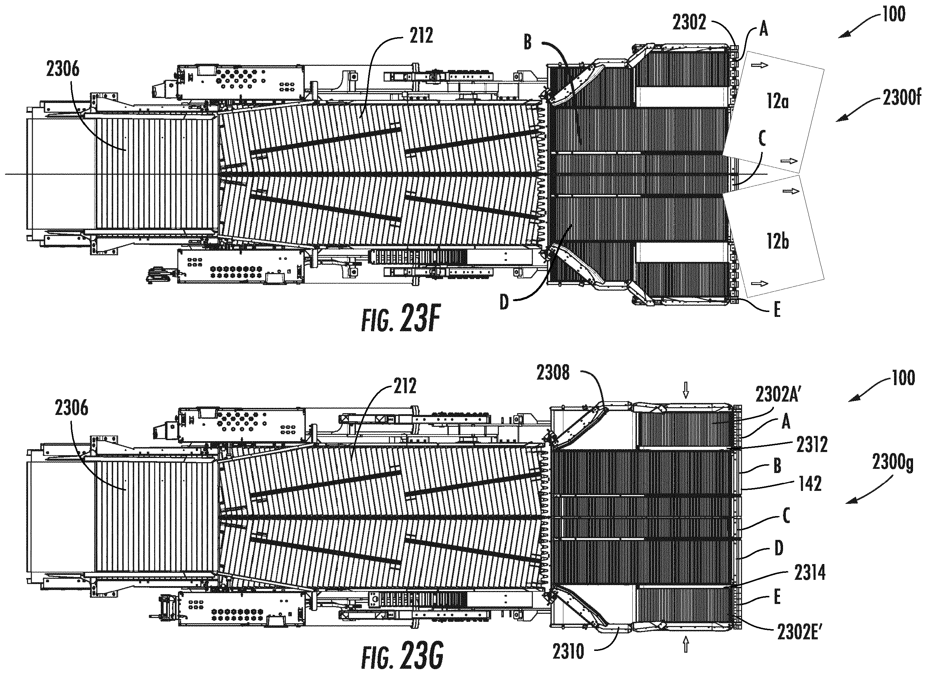

As such, cartons **12a** and/or **12b** may fall off the front portion **142,** as shown in scenario **2300f** after an interval of time from the scenario **2300e,** as shown in **FIG. 23F****.** Thus, the jam is cleared on the front portion **142,** as shown in scenario **2300g** after an interval of time from the scenario **2300f,** as shown in **FIG. 23G****.**

Further, as shown in **FIG. 23G****,** in an embodiment, the robotic material handling system **100** and/or the controller, on detecting that the jam is cleared, may retract the front portion **142** back to a second configuration. Additionally, the angled guides **2308, 2310** may retract, as shown in **FIG. 23G****,** when operating the front portion **142** in the second configuration.

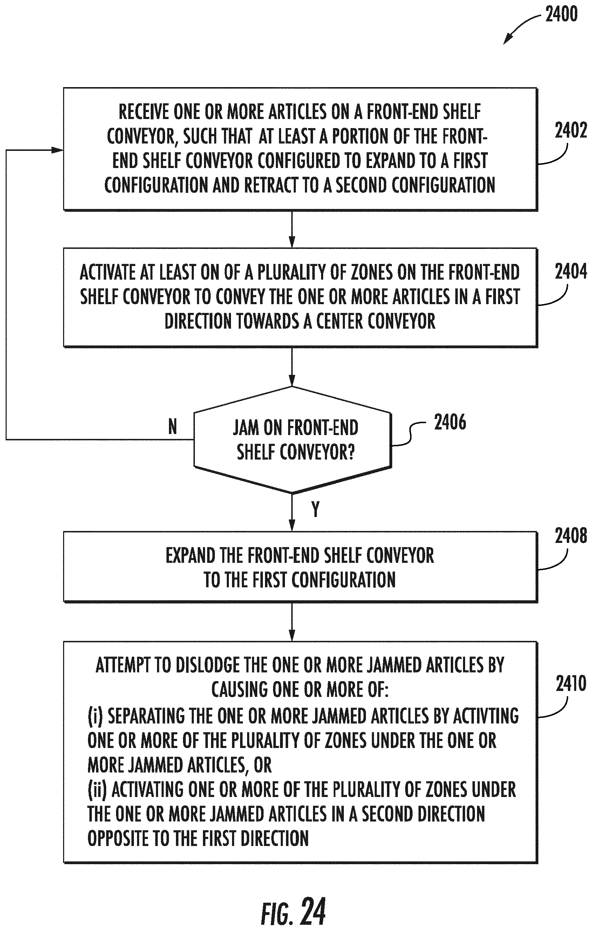

**FIG. 24** illustrates a flow diagram of an exemplary method **2400** of clearing a jam on the front portion **142** of the robotic material handling system **100** as illustrated in **FIGS. 23A-G**, in accordance with some embodiments described herein.

According to one or more embodiments of the present disclosure, the method **2400** includes receiving one or more articles on a front portion **142** (such as a front-end shelf conveyor), at step **2402.** As described above with reference to **FIGS. 23A-G**, at least a portion of the front portion **142** is expandable to a first configuration and retractable to a second configuration. As described above, the front portion **142** may receive articles unloaded from a carton pile in a truck and/or a trailer by the robotic material handling system **100.**

The method **2400** further includes, activating at least one of a plurality of zones **A, B, C, D, E** on the front portion **142** (such as a front-end shelf conveyor), as shown in **FIGS. 23A-G**, to convey received articles in a first direction towards the rearward conveyor **212,** at step **2404.** As described above the front portion **142** includes a plurality of individually controllable zones, such as zones **A, B, C, D, E,** as shown in **FIGS. 23A-G**. In an embodiment, the robotic material handling system **100** and/or the controller activates one or more zones **A, B, C, D, E** under the articles to be conveyed to move the articles from the front portion **142** to the rearward conveyor **212.**

Further, the method **2400** includes detecting one or more jammed articles on the front portion **142** (such as the front-end shelf conveyor), at step **2406.** As described above, the robotic material handling system **100** and/or the controller may monitor jammed and/or stalled products (for instance, the one or more cartons **12a, 12b)** during a product flow process. In this regard, the robotic material handling system **100** and/or the controller may monitor the jammed or stalled products during the flow process by: (i) a process timeout with product detection present; and/or (ii) a blocked photo eye timeout. In this regard, the term "process timeout" as used herein refers to a factor of expected time to clear a product based on a predefined speed of a conveyor belt. The term "photo-eye timeout" as used herein refers to a factor of expected time to clear a product based on conveyor speed and largest product size.

At step **2406,** if the robotic material handling system **100** and/or the controller determines that no jam exists on the front portion **142** (that is, received articles are transitioning from the front portion **142** to the rearward conveyor **212** smoothly), the method **2400** proceeds to step **2402** to receive more articles on the front portion **142.** However, if at step **2406,** the robotic material handling system **100** and/or the controller detects one or more jammed articles on the front portion **142,** the method **2400** proceeds to step **2408.**

At step **2408,** the method **2400** includes expanding the front portion **142** (such as a front-end shelf conveyor) to the first configuration, as described above with reference to **FIG. 23B****.** In an embodiment, the front portion **142** is expanded to the first configuration to provide additional space for jammed articles to move away from each other for clearing the jam, as described above.

Once the front portion **142** is expanded to the first configuration, the method **2400** proceeds to step **2410.** At step **2410,** the robotic material handling system **100** and/or the controller attempts to dislodge the one or more jammed articles by causing one or more of: separating the one or more jammed articles by activating one or more of the plurality of zones under the one or more jammed articles, and/or activating one or more of the plurality of zones under the one or more jammed articles in a second direction opposite to the first direction, as described above with reference to **FIGS. 23A-G**.

In an embodiment, the one or more of the plurality of zones under the one or more jammed articles may be activated in the second direction until the one or more jammed articles fall off the front portion **142,** thus clearing the jam on the front portion **142.**

Further, in an embodiment, the robotic material handling system **100** and/or the controller may attempt to dislodge the one or more jammed articles by separating the one or more jammed articles through activating one or more of the plurality of zones under the one or more jammed articles.

The robotic material handling system **100** and/or the controller may check if the jam on the front portion **142** has cleared. If not, the robotic material handling system **100** and/or the controller may activate one or more of the plurality of zones under the one or more jammed articles in the second direction opposite to the first direction. Thus, the robotic material handling system **100** and/or the controller may automatically detect and clear the jam on the front portion **142** without manual intervention and/or interrupting the unloading operation.

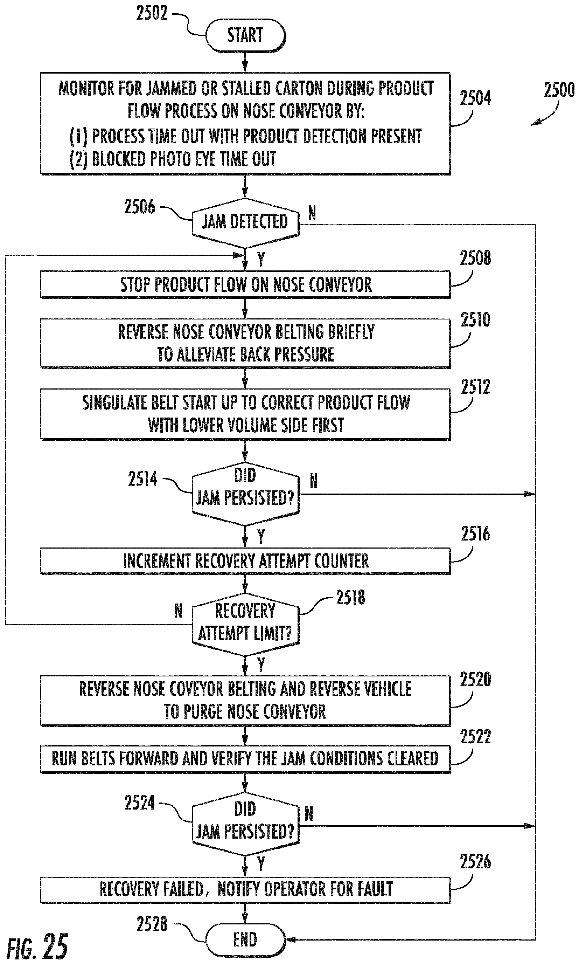

**FIG. 25** illustrates a flow diagram of an exemplary method **2500** of clearing a jam on the nose conveyor **214** and/or the front portion **142** of the robotic material handling system 100 as illustrated in **FIGS. 23A-G**, in accordance with some embodiments described herein.

According to one or more embodiments of the present disclosure, the method **2500** starts at block **2502** and includes monitoring jammed or stalled products on the nose conveyor **214** during a product flow process at block **2504.** In an embodiment, the robotic material handling system **100** and/or the controller may monitor the jammed or stalled products during the flow process by: (i) a process timeout with product detection present; and/or (ii) a blocked photo eye timeout. As described above, the term "process timeout" as used herein refers to a factor of expected time to clear a product based on a predefined speed of a conveyor belt. As described above, the term "photo-eye timeout" as used herein refers to a factor of expected time to clear a product based on conveyor belt speed and largest product size.

Further, the method **2500** may include the robotic material handling system **100** and/or the controller determining whether a jam is detected on the nose conveyor **214** and/or the front portion **142** of the robotic material handling system **100,** at block **2506.** If the robotic material handling system **100** and/or the controller determines that no jam exists on the nose conveyor **214** and/or the front portion **142** of the robotic material handling system **100,** the method **2500** proceeds to block **2528** and ends.

However, if the robotic material handling system **100** and/or the controller determines that a jam exists at block **2506,** then, the method **2500** may proceed to block **2508.** At block **2508,** the robotic material handling system **100** and/or the controller may stop product flow, including downstream or upstream flow of the one or more cartons **12** on the nose conveyor **214** and/or flow of anything moving upstream.

The method may further include reversing nose conveyor **214** briefly to alleviate back pressure at block **2510.** In an embodiment, the robotic material handling system **100** and/or the controller may reverse one or more beltings associated with a plurality of individually controllable zones (such as zones **A, B, C, D, E** as shown in **FIGS. 23A-G** of the nose conveyor **214)** briefly to alleviate back pressure on the jammed or stalled cartons, as described above.

The method may further include singulating belt start up to correct product flow with lower volume side first, at block **2512.** In an embodiment, the robotic material handling system **100** and/or the controller may start or actuate one or more zones (for instance, one or more zones from the zones **A, B, C, D, E)** that has a lower volume of products on it. In an embodiment, the robotic material handling system **100** and/or the controller may utilize conveyor screening process, as described above, to identify zone(s) with lower volume of products on it, and may prioritize the actuation of zones accordingly. After actuating the zone(s) that has lower volume of the product on it, the robotic material handling system **100** and/or the controller may start or actuate remaining of the zones after a delay (for example, after a pre-defined time period following actuating the zone(s) with lower volume of product).

The method may further include checking, by the robotic material handling system **100** and/or the controller, if jam still persists on the nose conveyor **214,** at block **2514.** If it is determined that jam does not persist at block **2514,** the method proceeds to block **2528** and ends.

However, in response to determining that the jam is present on the nose conveyor **214,** the robotic material handling system **100** and/or the controller may increment a "recovery attempt counter" maintained by the robotic material handling system **100** and/or the controller for counting a number of attempts performed to remove a jam condition (for example, jamming or stalling of the cartons **12** on the nose conveyor **214),** at block **2516.**

Further, at block **2518,** the robotic material handling system **100** and/or the controller may perform a determination on whether a pre-defined limit set (for example, five attempts) has been met for the recovery attempt by the robotic material handling system **100** and/or the controller for unjamming the one or more cartons **12** on the nose conveyor **214.** If it is determined that the recovery attempt limit is not met, at block **2514,** the method proceeds to block **2508,** as shown.

In an embodiment, depending on the number of recovery attempts (for example, three attempts), other methods to clear jam may be utilized, such as a combination of forward and reverse actuation of one or more zones to rotate volume and/or expansion of at least a portion of the front portion **142** of the nose conveyor **214,** as described above with reference to **FIG. 24****.**

In response to determining that the pre-defined limit of the recovery counter is met, the method may proceed to block **2520.** At block **2520,** the method may include reversing nose conveyor belting and reversing vehicle (such as, robotic material handling system **100)** to purge the nose conveyor **214,** as described above with reference to **FIG. 24****.** Further, at block **2522,** the method may include running, by the robotic material handling system **100** and/or the controller, the nose conveyor **214** forward to verify that the jam conditions are cleared.

The method may further include checking, by the robotic material handling system 100 and/or the controller, if jam still persists on the nose conveyor **214,** at block **2524.** If it is determined that jam does not persist at block **2524,** the method proceeds to block **2528** and ends.

In response to determining that the jam is present on the nose conveyor **214,** the robotic material handling system **100** and/or the controller may notify an operator of the robotic material handling system **100** regarding a fault on the robotic material handling system **100** and/or may generate an alarm indicating failure of a recovery of jam, at block **2526.** Thereafter, the method **2500** ends at block **2528.**

As used herein, processors may be any programmable microprocessor, microcomputer or multiple processor chip or chips that can be configured by software instructions (applications) to perform a variety of functions, including the functions of the various embodiments described above. In the various devices, multiple processors maybe provided, such as one processor dedicated to wireless communication functions and one processor dedicated to running other applications. Typically, software applications may be stored in the internal memory before they are accessed and loaded into the processors. The processors may include internal memory sufficient to store the application software instructions. In many devices, the internal memory may be a volatile or nonvolatile memory, such as flash memory, or a mixture of both. For the purposes of this description, a general reference to memory refers to memory accessible by the processors including internal memory or removable memory plugged into the various devices and memory within the processors.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system.

The hardware used to implement the various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some steps or methods may be performed by circuitry that is specific to a given function.

In one or more exemplary embodiments, the functions described may be implemented in hardware, software, firmware, or any combination thereof. If implemented in software, the functions may be stored on or transmitted over as one or more instructions or code on a non-transitory processor-readable, computer-readable, or server-readable medium or a non-transitory processor-readable storage medium. The steps of a method or algorithm disclosed herein may be embodied in a processor-executable software module or processor-executable software instructions which may reside on a non-transitory computer-readable storage medium, a non-transitory server-readable storage medium, and/or a non-transitory processor-readable storage medium. In various embodiments, such instructions may be stored processor-executable instructions or stored processor-executable software instructions. Tangible, non-transitory computer-readable storage media may be any available media that may be accessed by a computer. By way of example, and not limitation, such non-transitory computer-readable media may comprise RAM, ROM, EEPROM, CD-ROM or other optical disk storage, magnetic disk storage or other magnetic storage devices, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and Blu-ray^{®} disc where disks usually reproduce data magnetically, while discs reproduce data optically with lasers. Combinations of the above should also be included within the scope of non-transitory computer-readable media. Additionally, the operations of a method or algorithm may reside as one or any combination or set of codes and/or instructions on a tangible, non-transitory processor-readable storage medium and/or computer-readable medium, which may be incorporated into a computer program product.

The foregoing description of an embodiment has been presented for purposes of illustration and description.

## Claims

1. A method of conveying articles on a robotic material handling system (100), the method comprising:
receiving (2402) one or more articles (12a, 12b) on a front portion (142) of a conveyor system (110) of the robotic material handling system (100), wherein at least a portion (2302A', 2302E') of the front portion (142) is configured to expand to a first configuration and retract to a second configuration;
activating (2404) at least one of a plurality of zones (A, B, C, D, E) on the front portion (142) to convey the one or more articles (12a, 12b) in a first direction towards a rearward conveyor (212);
the method being **characterized by**:
detecting (2406) one or more jammed articles (12a, 12b) on the front portion (142);
in response to detecting the one or more jammed articles (12a, 12b), expanding (2408) the front portion (142) to the first configuration; and
dislodging (2410) the one or more jammed articles (12a, 12b) by causing one or more of:
separating the one or more jammed articles (12a, 12b) by activating one or more of the plurality of zones (A, B, C, D, E) under the one or more jammed articles (12a, 12b), or
activating one or more of the plurality of zones (A, B, C, D, E) under the one or more jammed articles (12a, 12b) in a second direction opposite to the first direction.

2. The method of claim 1, further comprising guiding the one or more articles with one or more angled guides (2308, 2310) of the front portion (142) onto the rearward conveyor (212), wherein the rearward conveyor (212) is narrower than the front portion (142).

3. The method of claim 1, wherein separating the one or more jammed articles (12a, 12b) further comprises actuating at least one of the plurality of zones (A, B, C, D, E) under the one or more jammed articles (12a, 12b) in the second direction, while actuating at least another one of the plurality of zones (A, B, C, D, E) under the one or more jammed articles (12a, 12b) in the first direction.

4. The method of claim 1, wherein separating the one or more jammed articles (12a, 12b) further comprise actuating at least one of the plurality of zones (A, B, C, D, E) under the one or more jammed articles (12a, 12b) at a first speed, while actuating at least another one of the plurality of zones (A, B, C, D, E) under the one or more jammed articles (12a, 12b) at a second speed different than the first speed.

5. The method of claim 1, wherein separating the one or more jammed articles (12a, 12b) further comprises actuating at least one of the plurality of zones (A, B, C, D, E) under the one or more jammed articles (12a, 12b) at a first speed in the first direction, while stopping at least another one of the plurality of zones (A, B, C, D, E) under the one or more jammed articles (12a, 12b).

6. The method of claim 1, wherein separating the one or more jammed articles (12a, 12b) further comprises accelerating or decelerating at least one of the plurality of zones (A, B, C, D, E) under the one or more jammed articles (12a, 12b) in one or more of the first direction and the second direction.

7. The method of claim 1, wherein the one or more jammed articles (12a, 12b) comprise a jammed oversize article, wherein dislodging the one or more jammed articles (12a, 12b) further comprises actuating at least two of the plurality of zones (A, B, C, D, E) in opposite directions to move a first end of the jammed oversize article upstream and a second end of the jammed oversize article downstream to rotate the jammed oversize article from a broad side position to a narrow end first position.

8. A robotic material handling system (100) comprising:
a conveyor system (110) configured to convey one or more articles (12a, 12b) towards a rear end (130) of the robotic material handling system (100), the conveyor system (110) comprising:
a front portion (142) configured to receive the one or more articles (12a, 12b), wherein at least a portion (2302A', 2302E') of the front portion (142) is configured to expand to a first configuration and retract to a second configuration, wherein the front portion (142) includes a plurality of individually actuatable zones to (A, B, C, D, E) convey the one or more articles (12a, 12b); and
a rearward conveyor (212) positioned downstream of the front portion (142), configured to receive the one or more articles (12a, 12b) from the front portion (142); and
a controller (144) in electronic communication with the conveyor system (110), the controller (144) configured to:
activate at least one of a plurality of zones (A, B, C, D, E) on the front portion (142) to convey the one or more articles (12a, 12b) in a first direction towards the rearward conveyor (212);
the robotic material handling system (100) being **characterized by** the controller (144) being further configured to:
detect one or more jammed articles (12a, 12b) on the front portion (142);
in response, actuate expansion of the front portion (142) to the first configuration; and
dislodge the one or more jammed articles (12a, 12b) by causing one or more of:
separating the one or more jammed articles (12a, 12b) by activating one or more of the plurality of zones (A, B, C, D, E) under the one or more jammed articles (12a, 12b), or
activating one or more of the plurality of zones (A, B, C, D, E) under the one or more jammed articles (12a, 12b) in a second direction opposite to the first direction.

9. The robotic material handling system (100) of claim 8, wherein the controller (144) is further configured to:
actuate the expansion of the front portion (142) to the first configuration while activating at least one of the plurality of individually actuatable zones (A, B, C, D, E) contacting the one or more jammed articles (12a, 12b);
determine whether at least one of the one or more jammed articles (12a, 12b) is moving in the first direction towards the rearward conveyor (212); and
in response, actuate a retraction of the front portion (142) to the second configuration.

10. The robotic material handling system (100) of claim 8, wherein the controller (144) is further configured to activate at least one of the plurality of individually actuatable zones (A, B, C, D, E) of the front portion (142) to convey at least one portion of the at least one jammed article (12a, 12b) in the second direction away from the rearward conveyor (212).

11. The robotic material handling system (100) of claim 8, wherein the controller (144) is further configured to separate the one or more jammed articles (12a, 12b) by actuating at least one of the plurality of zones (A, B, C, D, E) under the one or more jammed articles (12a, 12b) in the second direction, while actuating at least another one of the plurality of zones (A, B, C, D, E) under the one or more jammed articles (12a, 12b) in the first direction.

12. The robotic material handling system (100) of claim 8, wherein the controller (144) is further configured to separate the one or more jammed articles (12a, 12b) by actuating at least one of the plurality of zones (A, B, C, D, E) under the one or more jammed articles (12a, 12b) at a first speed, while actuating at least another one of the plurality of zones (A, B, C, D, E) under the one or more jammed articles (12a, 12b) at a second speed different than the first speed.

13. The robotic material handling system (100) of claim 8, wherein the controller (144) is further configured to separate the one or more jammed articles (12a, 12b) by actuating at least one of the plurality of zones (A, B, C, D, E) under the one or more jammed articles (12a, 12b) at a first speed in the first direction, while stopping at least another one of the plurality of zones (A, B, C, D, E) under the one or more jammed articles (12a, 12b).

14. The robotic material handling system (100) of claim 8, wherein the controller (144) is further configured to separate the one or more jammed articles (12a, 12b) by accelerating or decelerating at least one of the plurality of zones (A, B, C, D, E) under the one or more jammed articles (12a, 12b) in one or more of the first direction and the second direction.

15. The robotic material handling system (100) of claim 8, further comprising one or more angled guides (2308, 2310) coupled to the front portion (142) for guiding one or more articles (12a, 12b) onto the rearward conveyor (212), wherein the rearward conveyor (212) is narrower than the front portion (142).

## Patentansprüche

1. Verfahren zum Fördern von Gegenständen auf einem robotischen Materialhandhabungssystem (100), wobei das Verfahren umfasst:
Empfangen (2402) eines oder mehrerer Gegenstände (12a, 12b) auf einem vorderen Abschnitt (142) eines Fördersystems (110) des robotischen Materialhandhabungssystems (100), wobei mindestens ein Abschnitt (2302A', 2302E') des vorderen Abschnitts (142) dazu konfiguriert ist, in eine erste Konfiguration auszufahren und in eine zweite Konfiguration einzufahren;
Aktivieren (2404) mindestens einer von einer Mehrzahl von Zonen (A, B, C, D, E) auf dem vorderen Abschnitt (142), um den einen oder die mehreren Gegenstände (12a, 12b) in einer ersten Richtung zu einem hinteren Förderer (212) zu fördern;
wobei das Verfahren durch Folgendes gekennzeichnet ist:
Detektieren (2406) eines oder mehrerer eingeklemmter Gegenstände (12a, 12b) auf dem vorderen Abschnitt (142);
als Reaktion auf das Detektieren des einen oder der mehreren eingeklemmten Gegenstände (12a, 12b): Ausfahren (2408) des vorderen Abschnitts (142) in die erste Konfiguration; und
Entfernen (2410) des einen oder der mehreren eingeklemmten Gegenstände (12a, 12b) durch Veranlassen von einem oder mehreren von Folgendem:
Trennen des einen oder der mehreren eingeklemmten Gegenstände (12a, 12b) durch Aktivieren einer oder mehrerer der Mehrzahl von Zonen (A, B, C, D, E) unter dem einen oder den mehreren eingeklemmten Gegenständen (12a, 12b) oder
Aktivieren einer oder mehrerer der Mehrzahl von Zonen (A, B, C, D, E) unter dem einen oder den mehreren eingeklemmten Gegenständen (12a, 12b) in einer zweiten Richtung entgegengesetzt zur ersten Richtung.

2. Verfahren nach Anspruch 1, ferner umfassend das Führen des einen oder der mehreren Gegenstände mit einer oder mehreren abgewinkelten Führungen (2308, 2310) des vorderen Abschnitts (142) auf den hinteren Förderer (212), wobei der hintere Förderer (212) schmaler als der vordere Abschnitt (142) ist.

3. Verfahren nach Anspruch 1, wobei das Trennen des einen oder der mehreren eingeklemmten Gegenstände (12a, 12b) ferner das Betätigen mindestens einer der Mehrzahl von Zonen (A, B, C, D, E) unter dem einen oder den mehreren eingeklemmten Gegenständen (12a, 12b) in der zweiten Richtung umfasst, während mindestens eine andere der Mehrzahl von Zonen (A, B, C, D, E) unter dem einen oder den mehreren eingeklemmten Gegenständen (12a, 12b) in der ersten Richtung betätigt wird.

4. Verfahren nach Anspruch 1, wobei das Trennen des einen oder der mehreren eingeklemmten Gegenstände (12a, 12b) ferner das Betätigen mindestens einer der Mehrzahl von Zonen (A, B, C, D, E) unter dem einen oder den mehreren eingeklemmten Gegenständen (12a, 12b) mit einer ersten Geschwindigkeit umfassen, während mindestens eine andere der Mehrzahl von Zonen (A, B, C, D, E) unter dem einen oder den mehreren eingeklemmten Gegenständen (12a, 12b) mit einer zweiten Geschwindigkeit betätigt wird, die sich von der ersten Geschwindigkeit unterscheidet.

5. Verfahren nach Anspruch 1, wobei das Trennen des einen oder der mehreren eingeklemmten Gegenstände (12a, 12b) ferner das Betätigen mindestens einer der Mehrzahl von Zonen (A, B, C, D, E) unter dem einen oder den mehreren eingeklemmten Gegenständen (12a, 12b) mit einer ersten Geschwindigkeit in der ersten Richtung umfasst, während mindestens eine andere der Mehrzahl von Zonen (A, B, C, D, E) unter dem einen oder den mehreren eingeklemmten Gegenständen (12a, 12b) angehalten wird.

6. Verfahren nach Anspruch 1, wobei das Trennen des einen oder der mehreren eingeklemmten Gegenstände (12a, 12b) ferner das Beschleunigen oder Verlangsamen mindestens einer der Mehrzahl von Zonen (A, B, C, D, E) unter dem einen oder den mehreren eingeklemmten Gegenständen (12a, 12b) in einer oder mehreren der ersten Richtung und der zweiten Richtung umfasst.

7. Verfahren nach Anspruch 1, wobei der eine oder die mehreren eingeklemmten Gegenstände (12a, 12b) einen eingeklemmten übergroßen Gegenstand umfassen, wobei das Entfernen des einen oder der mehreren eingeklemmten Gegenstände (12a, 12b) ferner das Betätigen mindestens zweier der Mehrzahl von Zonen (A, B, C, D, E) in entgegengesetzten Richtungen umfasst, um ein erstes Ende des eingeklemmten übergroßen Gegenstands stromaufwärts und ein zweites Ende des eingeklemmten übergroßen Gegenstands stromabwärts zu bewegen, um den eingeklemmten übergroßen Gegenstand aus einer Breitseitenposition in eine erste Position des schmalen Endes zu drehen.

8. Robotisches Materialhandhabungssystem (100), umfassend:
ein Fördersystem (110), das dazu konfiguriert ist, einen oder mehrere Gegenstände (12a, 12b) zu einem hinteren Ende (130) des robotischen Materialhandhabungssystems (100) zu fördern, wobei das Fördersystem (110) umfasst:
einen vorderen Abschnitt (142), der dazu konfiguriert ist, den einen oder die mehreren Gegenstände (12a, 12b) zu empfangen, wobei mindestens ein Abschnitt (2302A', 2302E') des vorderen Abschnitts (142) dazu konfiguriert ist, in eine erste Konfiguration auszufahren und in eine zweite Konfiguration einzufahren, wobei der vordere Abschnitt (142) eine Mehrzahl von einzeln betätigbaren Zonen (A, B, C, D, E) zum Fördern des einen oder der mehreren Gegenstände (12a, 12b) einschließt; und
einen hinteren Förderer (212), der stromabwärts des vorderen Abschnitts (142) positioniert und dazu konfiguriert ist, den einen oder die mehreren Gegenstände (12a, 12b) von dem vorderen Abschnitt (142) zu empfangen; und
eine Steuerung (144) in elektronischer Kommunikation mit dem Fördersystem (110), wobei die Steuerung (144) dazu konfiguriert ist:
mindestens eine von einer Mehrzahl von Zonen (A, B, C, D, E) auf dem vorderen Abschnitt (142) zu aktivieren, um den einen oder die mehreren Gegenstände (12a, 12b) in einer ersten Richtung zu dem hinteren Förderer (212) zu fördern;
wobei das robotische Materialhandhabungssystem (100) **dadurch gekennzeichnet ist, dass** die Steuerung (144) ferner dazu konfiguriert ist:
einen oder mehrere eingeklemmte Gegenstände (12a, 12b) auf dem vorderen Abschnitt (142) zu detektieren;
als Reaktion darauf das Ausfahren des vorderen Abschnitts (142) in die erste Konfiguration zu betätigen; und
den einen oder die mehreren eingeklemmten Gegenstände (12a, 12b) durch Veranlassen von einem oder mehreren von Folgendem zu entfernen:
Trennen des einen oder der mehreren eingeklemmten Gegenstände (12a, 12b) durch Aktivieren einer oder mehrerer der Mehrzahl von Zonen (A, B, C, D, E) unter dem einen oder den mehreren eingeklemmten Gegenständen (12a, 12b) oder
Aktivieren einer oder mehrerer der Mehrzahl von Zonen (A, B, C, D, E) unter dem einen oder den mehreren eingeklemmten Gegenständen (12a, 12b) in einer zweiten Richtung entgegengesetzt zur ersten Richtung.

9. Robotisches Materialhandhabungssystem (100) nach Anspruch 8, wobei die zentrale Steuerung (144) ferner dazu konfiguriert ist:
das Ausfahren des vorderen Abschnitts (142) in die erste Konfiguration zu betätigen, während mindestens eine der Mehrzahl von einzeln betätigbaren Zonen (A, B, C, D, E), die den einen oder die mehreren eingeklemmten Gegenstände (12a, 12b) berührt, aktiviert wird;
zu bestimmen, ob sich mindestens einer von dem einen oder den mehreren eingeklemmten Gegenständen (12a, 12b) in der ersten Richtung zu dem hinteren Förderer (212) bewegt; und
als Reaktion darauf ein Einfahren des vorderen Abschnitts (142) in die zweite Konfiguration zu betätigen.

10. Robotisches Materialhandhabungssystem (100) nach Anspruch 8, wobei die Steuerung (144) ferner dazu konfiguriert ist, mindestens eine der Mehrzahl von einzeln betätigbaren Zonen (A, B, C, D, E) des vorderen Abschnitts (142) zu aktivieren, um mindestens einen Abschnitt des mindestens einen eingeklemmten Gegenstands (12a, 12b) in der zweiten Richtung weg von dem hinteren Förderer (212) zu fördern.

11. Robotisches Materialhandhabungssystem (100) nach Anspruch 8, wobei die Steuerung (144) ferner dazu konfiguriert ist, den einen oder die mehreren eingeklemmten Gegenstände (12a, 12b) durch Betätigen mindestens einer der Mehrzahl von Zonen (A, B, C, D, E) unter dem einen oder den mehreren eingeklemmten Gegenständen (12a, 12b) in der zweiten Richtung zu trennen, während mindestens eine weitere der Mehrzahl von Zonen (A, B, C, D, E) unter dem einen oder den mehreren eingeklemmten Gegenständen (12a, 12b) in der ersten Richtung betätigt wird.

12. Robotisches Materialhandhabungssystem (100) nach Anspruch 8, wobei die Steuerung (144) ferner dazu konfiguriert ist, den einen oder die mehreren eingeklemmten Gegenstände (12a, 12b) ferner durch Betätigen mindestens einer der Mehrzahl von Zonen (A, B, C, D, E) unter dem einen oder den mehreren eingeklemmten Gegenständen (12a, 12b) mit einer ersten Geschwindigkeit zu trennen, während mindestens eine andere der Mehrzahl von Zonen (A, B, C, D, E) unter dem einen oder den mehreren eingeklemmten Gegenständen (12a, 12b) mit einer zweiten Geschwindigkeit betätigt wird, die sich von der ersten Geschwindigkeit unterscheidet.

13. Robotisches Materialhandhabungssystem (100) nach Anspruch 8, wobei die Steuerung (144) ferner dazu konfiguriert ist, den einen oder die mehreren eingeklemmten Gegenstände (12a, 12b) durch Betätigen mindestens einer der Mehrzahl von Zonen (A, B, C, D, E) unter dem einen oder den mehreren eingeklemmten Gegenständen (12a, 12b) mit einer ersten Geschwindigkeit in der ersten Richtung zu trennen, während mindestens eine andere der Mehrzahl von Zonen (A, B, C, D, E) unter dem einen oder den mehreren eingeklemmten Gegenständen (12a, 12b) angehalten wird.

14. Robotisches Materialhandhabungssystem (100) nach Anspruch 8, wobei die Steuerung (144) ferner dazu konfiguriert ist, den einen oder die mehreren eingeklemmten Gegenstände (12a, 12b) durch Beschleunigen oder Verlangsamen mindestens einer der Mehrzahl von Zonen (A, B, C, D, E) unter dem einen oder mehreren eingeklemmten Gegenständen (12a, 12b) in einer oder mehreren der ersten Richtung und der zweiten Richtung zu trennen.

15. Robotisches Materialhandhabungssystem (100) nach Anspruch 8, ferner umfassend eine oder mehrere abgewinkelte Führungen (2308, 2310), die mit dem vorderen Abschnitt (142) gekoppelt sind, zum Führen eines oder mehrerer Gegenstände (12a, 12b) auf den hinteren Förderer (212), wobei der hintere Förderer (212) schmaler als der vordere Abschnitt (142) ist.

## Revendications

1. Procédé de transport d'articles sur un système robotisé de manutention de matériel (100), le procédé comprenant :
la réception (2402) d'au moins un article (12a, 12b) sur une partie avant (142) d'un système de transport (110) du système robotisé de manutention de matériel (100), dans lequel au moins une partie (2302A', 2302E') de la partie avant (142) est conçue pour se déployer dans une première configuration et pour se rétracter dans une seconde configuration ;
l'activation (2404) d'au moins une zone parmi une pluralité de zones (A, B, C, D, E) sur la partie avant (142) pour transporter l'au moins un article (12a, 12b) dans une première direction vers un transporteur arrière (212) ;
le procédé **se caractérisant par** :
la détection (2406) d'au moins un article (12a, 12b) coincé sur la partie avant (142) ;
le déploiement (2408), en réponse à la détection de l'au moins un article (12a, 12b) coincé, de la partie avant (142) dans la première configuration ; et
le délogement (2410) de l'au moins un article (12a, 12b) coincé en provoquant :
la séparation de l'au moins un article (12a, 12b) coincé par activation de l'au moins une zone parmi la pluralité de zones (A, B, C, D, E) sous l'au moins un article (12a, 12b) coincé, et/ou
l'activation de l'au moins une zones parmi la pluralité de zones (A, B, C, D, E) sous l'au moins un article (12a, 12b) coincé dans une seconde direction opposée à la première direction.

2. Procédé selon la revendication 1, comprenant en outre le guidage de l'au moins un article au moyen d'au moins un guide (2308, 2310) incliné de la partie avant (142) sur le transporteur arrière (212), dans lequel le transporteur arrière (212) est plus étroit que la partie avant (142).

3. Procédé selon la revendication 1, dans lequel la séparation de l'au moins un article (12a, 12b) coincé comprend en outre l'activation de l'au moins une zone parmi la pluralité de zones (A, B, C, D, E) sous l'au moins un article (12a, 12b) coincé dans une seconde direction, tout en activant l'au moins une autre zone parmi la pluralité de zones (A, B, C, D, E) sous l'au moins un article (12a, 12b) coincé dans une première direction.

4. Procédé selon la revendication 1, dans lequel la séparation de l'au moins un article (12a, 12b) coincé comprend en outre l'activation de l'au moins une zone parmi la pluralité de zones (A, B, C, D, E) sous l'au moins un article (12a, 12b) coincé à une première vitesse, tout en activant l'au moins une autre zone parmi la pluralité de zones (A, B, C, D, E) sous l'au moins un article (12a, 12b) coincé à une seconde vitesse différente de la première vitesse.

5. Procédé selon la revendication 1, dans lequel la séparation de l'au moins un article (12a, 12b) coincé comprend en outre l'activation de l'au moins une zone parmi la pluralité de zones (A, B, C, D, E) sous l'au moins un article (12a, 12b) coincé à une première vitesse dans une première direction, tout en arrêtant l'au moins une autre zone parmi la pluralité de zones (A, B, C, D, E) sous l'au moins un article (12a, 12b) coincé.

6. Procédé selon la revendication 1, dans lequel la séparation de l'au moins un article (12a, 12b) coincé comprend en outre l'accélération ou la décélération de l'au moins une zone parmi la pluralité de zones (A, B, C, D, E) sous l'au moins un article (12a, 12b) coincé dans la première direction et/ou dans la seconde direction.

7. Procédé selon la revendication 1, dans lequel l'au moins un article (12a, 12b) coincé comprend un article hors gabarit coincé, dans lequel le délogement de l'au moins un article (12a, 12b) coincé comprend en outre l'activation des au moins deux zones de la pluralité de zones (A, B, C, D, E) dans des directions opposées pour déplacer une première extrémité de l'article hors gabarit coincé en amont et une seconde extrémité de l'article hors gabarit coincé en aval pour faire tourner l'article hors gabarit coincé d'une position côté large à une première position d'extrémité étroite.

8. Système robotisé de manutention de matériel (100) comprenant :
un système de transport (110) conçu pour transporter l'au moins un article (12a, 12b) vers une extrémité arrière (130) du système robotisé de manutention de matériel (100), le système de transport (110) comprenant :
une partie avant (142) conçue pour recevoir l'au moins un article (12a, 12b), dans lequel l'au moins une partie (2302A', 2302E') de la partie avant (142) est conçue pour se déployer dans une première configuration et pour se rétracter dans une seconde configuration, dans lequel la partie avant (142) comprend une pluralité de zones (A, B, C, D, E) actionnables individuellement pour transporter l'au moins un article (12a, 12b) ; et
un transporteur arrière (212) positionné en aval de la partie avant (142), conçu pour recevoir l'au moins un article (12a, 12b) en provenance de la partie avant (142) ; et
un organe de commande (144) en communication électronique avec le système de transport (110), l'organe de commande (144) étant conçu :
pour activer l'au moins une zone parmi la pluralité de zones (A, B, C, D, E) sur la partie avant (142) pour transporter l'au moins un article (12a, 12b) dans la première direction vers le transporteur arrière (212) ;
le système robotisé de manutention de matériel (100) étant **caractérisé en ce que** l'organe de commande (144) est en outre conçu :
pour détecter au moins un article (12a, 12b) coincé sur la partie avant (142) ;
pour actionner, en réponse, l'expansion de la partie avant (142) dans la première configuration ; et
pour déloger l'au moins un article (12a, 12b) coincé en provoquant :
la séparation de l'au moins un article (12a, 12b) coincé par activation de l'au moins une zone parmi la pluralité de zones (A, B, C, D, E) sous l'au moins un article (12a, 12b) coincé, et/ou
l'activation de l'au moins une zones parmi la pluralité de zones (A, B, C, D, E) sous l'au moins un article (12a, 12b) coincé dans une seconde direction opposée à la première direction.

9. Système robotisé de manutention de matériel (100) selon la revendication 8, dans lequel l'organe de commande (144) est en outre conçu :
pour actionner l'expansion de la partie avant (142) dans la première configuration tout en activant l'au moins une zone parmi la pluralité de zones (A, B, C, D, E) actionnables individuellement en contact avec l'au moins un article (12a, 12b) coincé ;
pour déterminer si l'au moins un parmi l'au moins un article (12a, 12b) coincé se déplace dans la première direction vers le transporteur arrière (212) ; et
pour actionner, en réponse, une rétraction de la partie avant (142) dans la seconde configuration.

10. Système robotisé de manutention de matériel (100) selon la revendication 8, dans lequel l'organe de commande (144) est en outre conçu pour activer l'au moins une zone parmi la pluralité de zones (A, B, C, D, E) actionnables individuellement de la partie avant (142) pour transporter l'au moins une partie de l'au moins un article (12a, 12b) coincé dans la seconde direction à distance du transporteur arrière (212).

11. Système robotisé de manutention de matériel (100) selon la revendication 8, dans lequel l'organe de commande (144) est en outre conçu pour séparer l'au moins un article (12a, 12b) coincé par actionnement de l'au moins une zone parmi la pluralité de zones (A, B, C, D, E) sous l'au moins un article (12a, 12b) coincé dans la seconde direction, tout par actionnement de l'au moins une autre zone parmi la pluralité de zones (A, B, C, D, E) sous l'au moins un article (12a, 12b) coincé dans la première direction.

12. Système robotisé de manutention de matériel (100) selon la revendication 8, dans lequel l'organe de commande (144) est en outre conçu pour séparer l'au moins un article (12a, 12b) coincé par actionnement de l'au moins une zone parmi la pluralité de zones (A, B, C, D, E) sous l'au moins un article (12a, 12b) coincé à une première vitesse, tout en activant l'au moins une autre zone parmi la pluralité de zones (A, B, C, D, E) sous l'au moins un article (12a, 12b) coincé à une seconde vitesse différente de la première vitesse.

13. Système robotisé de manutention de matériel (100) selon la revendication 8, dans lequel l'organe de commande (144) est en outre conçu pour séparer l'au moins un article (12a, 12b) coincé par actionnement de l'au moins une zone parmi la pluralité de zones (A, B, C, D, E) sous l'au moins un article (12a, 12b) coincé à une première vitesse dans la première direction, tout en arrêtant l'au moins une autre zone parmi la pluralité de zones (A, B, C, D, E) sous l'au moins un article (12a, 12b) coincé.

14. Système robotisé de manutention de matériel (100) selon la revendication 8, dans lequel l'organe de commande (144) est en outre conçu pour séparer l'au moins un article (12a, 12b) coincé par accélération ou par décélération de l'au moins une zone parmi la pluralité de zones (A, B, C, D, E) sous l'au moins un article (12a, 12b) coincé dans la première direction et/ou dans la seconde direction.

15. Système robotisé de manutention de matériel (100) selon la revendication 8, comprenant en outre au moins un guide incliné (2308, 2310) accouplés à la partie avant (142) permettant de guider l'au moins un article (12a, 12b) sur le transporteur arrière (212), le transporteur arrière (212) étant plus étroit que la partie avant (142).
